# FASCICULE DE BREVET EUROPEEN

(11) **EP 3 549 864 B1**
(45) Date de publication et mention de la délivrance du brevet: **30.11.2022**
(21) Numéro de dépôt: 19167676.6
(22) Date de dépôt: 05.04.2019
(51) Int. Cl.: B64D 11/06

(54) **SYSTEME DE STIMULATION, SIEGE DE VEHICULE ET VEHICULE ASSOCIES**
STIMULATIONSSYSTEM, ENTSPRECHENDER FAHRZEUGSITZ UND ENTSPRECHENDES FAHRZEUG
STIMULATION SYSTEM, ASSOCIATED VEHICLE SEAT AND VEHICLE

(30) Priorité: 06.04.2018 FR 1853040
(43) Date de publication de la demande: 09.10.2019
(73) Titulaire: Pga Electronic, 36130 Montierchaume (FR)
(72) Inventeur: PALACIO, Bruno, 36130 MONTIERCHAUME (FR)
(74) Mandataire: Brevalex

(56) Documents cités:
- EP-A1- 1 304 144
- EP-A1- 3 428 010
- DE-U1- 20 313 390
- JP-A- 2010 030 574
- US-A1- 2002 115 949
- US-A1- 2009 079 243
- US-B2- 7 678 041

## Description

### DOMAINE TECHNIQUE

La présente invention concerne un système de stimulation des membres inférieurs d'un passager d'un véhicule.

L'invention concerne également une installation de stimulation, un procédé de commande d'une telle installation, un siège de véhicule équipé d'un tel système de stimulation et un véhicule embarquant un tel siège.

L'invention s'applique au domaine du transport de personnes, notamment au domaine du transport aérien de personnes.

### ÉTAT DE LA TECHNIQUE ANTÉRIEURE

Dans les transports actuels, tels que le bus, le train ou l'avion, les passagers sont généralement contraints de rester assis. En outre, l'espace disponible pour permettre aux passagers de mouvoir leurs membres inférieurs est généralement restreint. Dans de telles circonstances, les passagers sont susceptibles de ressentir des engourdissements dus à l'inaction musculaire et l'appauvrissement de la circulation sanguine dans les membres inférieurs qui résultent de la station assise prolongée.

Il est connu d'équiper un véhicule, au niveau de la partie inférieure d'un siège, d'un dispositif comprenant des leviers, similaires à des pédales d'accélérateur ou d'embrayage de voiture, ou encore à des dispositifs de type « steppers » d'exercice physique, destinés à être actionnés par un passager avec ses pieds, et ce dans le but de proposer aux passagers un moyen d'exercer leurs membres inférieurs.

Néanmoins, un tel dispositif ne donne pas entière satisfaction.

En effet, l'utilisation d'un tel dispositif est généralement pénible, ce qui décourage souvent leur utilisation par les passagers. En outre, l'installation d'un tel dispositif à bord d'un véhicule se fait généralement au prix d'un surencombrement, ce qui est préjudiciable eu égard aux contraintes déjà existantes en matière de circulation et d'évacuation dans les véhicules de transport.

D'autres systèmes de stimulation sont également connus du document EP3428010 Un but de l'invention est donc de proposer un système de stimulation propre à conduire à une activation des muscles des membres inférieurs du passager, et à entraîner une meilleure atténuation de l'engourdissement engendré par une station assise prolongée, tout en présentant un encombrement réduit par rapport aux dispositifs de l'état de la technique.

### EXPOSÉ DE L'INVENTION

A cet effet, l'invention a pour objet un système de stimulation du type précité, comportant un support, un dispositif d'appui et un dispositif d'actionnement,
le dispositif d'appui comportant deux organes d'appui, chaque organe d'appui étant destiné à recevoir une partie respective d'un membre inférieur du passager,
chaque organe d'appui étant mobile entre une première position correspondante, dans laquelle l'organe d'appui se trouve à une première distance correspondante du support, et une deuxième position correspondante, dans laquelle l'organe d'appui se trouve à une deuxième distance correspondante du support distincte de la première distance,
le dispositif d'actionnement étant configuré pour provoquer, successivement au cours du temps :
   - l'amenée de l'un des deux organes d'appui de la première position correspondante vers la deuxième position correspondante, puis de la deuxième position correspondante vers la première position correspondante ;
   - puis, à l'issue d'un temps de latence non nul, l'amenée de l'autre des deux organes d'appui de la première position correspondante vers la deuxième position correspondante, puis de la deuxième position correspondante vers la première position correspondante.

En effet, lorsque le passager pose une partie de ses membres inférieurs, en particulier ses pieds et/ou ses mollets, sur un tel système de stimulation, et qu'il en commande le fonctionnement, le passage alterné de chaque dispositif d'appui entre la première et la deuxième positions correspondantes, confère au passager la sensation de marcher, en simulant, par exemple, les impacts sous les pieds et/ou les mouvements des mollets ressentis lors de la marche, et éventuellement en provoquant des réflexes secondaires associés à la marche.

La présence du dispositif d'actionnement rend l'utilisation d'un tel système de stimulation moins pénible pour le passager, qui est alors peu réticent à en faire usage.

En outre, un tel système de stimulation est apte à être associé à un siège, par exemple directement intégré sous une garniture d'un repose-pied et/ou d'un repose-jambe, ce qui se traduit par un surencombrement quasi nul et un meilleur respect des contraintes de circulation et d'évacuation dans le véhicule.

D'autres aspects avantageux de l'invention sont définis dans le jeu de revendications.

En outre, l'invention a pour objet un procédé de commande d'une installation de stimulation selon la revendication 11.

En outre, l'invention a pour objet, selon la revendication 15, un siège de véhicule équipé d'un système de stimulation tel que défini

Suivant un autre aspect avantageux de l'invention, un tel siège est un siège destiné à être embarqué à bord d'un bus, d'une voiture, d'un train, ou encore d'un aéronef.

En outre, l'invention a pour objet un véhicule comprenant au moins un siège tel que défini ci-dessus, ou comprenant au moins un siège et un système de stimulation tel que défini ci-dessus correspondant, le système de stimulation étant fixé à un plancher du véhicule, en regard d'une partie basse du siège, ou à un élément d'un siège précédent disposé immédiatement devant le siège, ou comprenant au moins un siège et une installation de stimulation tel que définie ci-dessus correspondante, le système de stimulation de l'installation de stimulation étant fixé à un plancher du véhicule, en regard d'une partie basse du siège, ou à un élément d'un siège précédent disposé immédiatement devant le siège.

Suivant un autre aspect avantageux de l'invention, un tel véhicule est un bus, une voiture, un train, ou encore un aéronef.

### BRÈVE DESCRIPTION DES DESSINS

L'invention sera mieux comprise à l'aide de la description qui va suivre, donnée uniquement à titre d'exemple non limitatif et faite en se référant aux dessins annexés sur lesquels :
- les figures 1A à 1C illustrent différents agencements de systèmes de stimulation selon l'invention, par rapport à un siège de véhicule ;
- la figure 2 est une représentation schématique en section, selon un plan parallèle à un plan de symétrie du siège, d'un premier mode de réalisation d'un système de stimulation selon l'invention ;
- la figure 3 est une représentation schématique en section, selon un plan orthogonal au plan de symétrie du siège, d'un deuxième mode de réalisation d'un système de stimulation selon l'invention, agencé au niveau d'un repose-jambe du siège ;
- la figure 4 est un chronogramme détaillant le fonctionnement des systèmes de stimulation des figures 2 et 3 ;
- la figure 5 est une représentation schématique en section, selon un plan parallèle au plan de symétrie du siège, du système de stimulation de la figure 3, agencé au niveau d'un repose-pied du siège et accueillant un pied d'un passager ;
- la figure 6 est une variante du système de stimulation de la figure 3 ;
- la figure 7 est une variante du système de stimulation de la figure 3 ;
- la figure 8 est une variante du système de stimulation de la figure 3 ;
- la figure 9 est une variante du système de stimulation de la figure 7 ;
- la figure 10A illustre l'utilisation du système de stimulation de la figure 3 agencé au niveau d'un repose-jambe du siège et accueillant deux mollets d'un passager, et la figure 10B illustre l'utilisation du système de stimulation de la figure 3 agencé au niveau d'un repose-pied du siège et accueillant deux pieds d'un passager ; et
- la figure 11 est un chronogramme détaillant le fonctionnement des systèmes de stimulation des figures 3 et 10.

### EXPOSÉ DÉTAILLÉ DE MODES DE RÉALISATION PARTICULIERS

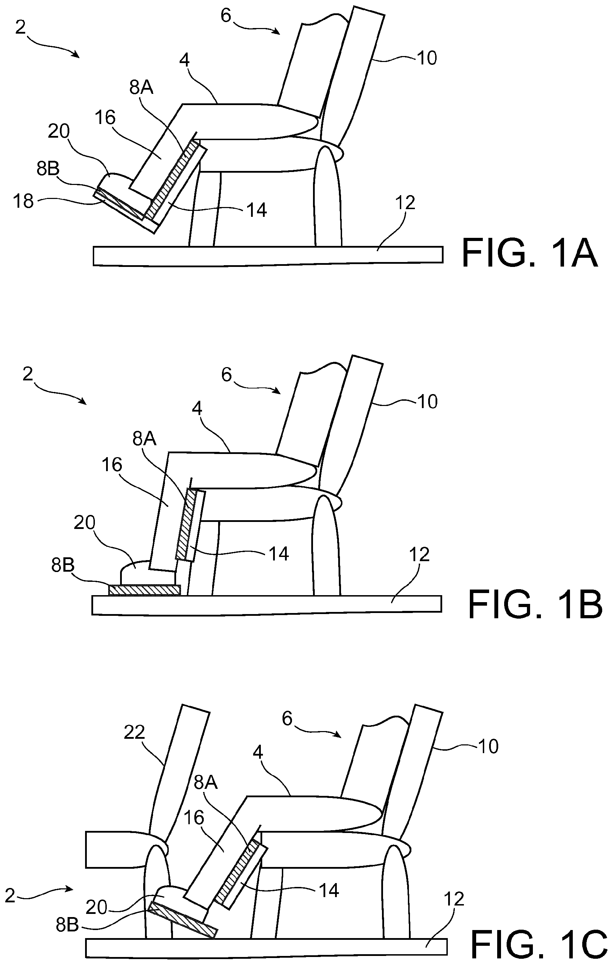

En référence aux figures 1A à 1C, un véhicule (non représenté) est équipé d'au moins une installation de stimulation 2 selon l'invention.

L'installation de stimulation 2 est destinée à la stimulation des membres inférieurs 4 d'un passager 6 du véhicule. En particulier, l'installation de stimulation 2 est destinée à la stimulation des membres inférieurs 4 du passager 6 par le déplacement de parties mobiles de l'installation de stimulation 2 sur lesquelles reposent des parties des membres inférieurs 4 du passager 6. Plus précisément, l'installation de stimulation 2 est destinée à simuler la marche chez le passager 6, en particulier lorsque le passager 6 se trouve en position assise.

Plus précisément, le véhicule est équipé de l'installation de stimulation 2 au niveau de ses sièges.

L'installation de stimulation 2 comprend au moins un système de stimulation, par exemple deux ou trois systèmes de stimulation.

L'installation de stimulation 2 est disposée au niveau d'une partie basse d'un siège 10 du véhicule destiné à recevoir le passager 6.

Par « partie basse d'un siège », il est entendu, au sens de la présente invention, la partie d'un siège 10 se trouvant à une hauteur inférieure ou égale à la moitié de la hauteur totale du siège 10 vis-à-vis d'un plancher 12 du véhicule, sur lequel est disposé ledit siège 10.

L'installation de stimulation 2 comporte, par exemple, un premier système de stimulation 8A disposé au niveau d'un repose-jambe 14 du siège 10 pour recevoir des mollets 16 du passager 6, et un deuxième système de stimulation 8B et un troisième système de stimulation agencés au niveau d'un repose-pied 18 du siège 10 pour recevoir chacun un pied 20 respectif du passager 6, comme illustré par la figure 1A (le troisième système de stimulation n'étant pas représenté).

En variante, le siège 10 est dépourvu de repose-jambe, respectivement de repose-pied. Dans ce cas, le premier système de stimulation 8A, respectivement les deuxième 8B et troisième systèmes de stimulation, est agencé par rapport au siège 10 pour tenir lieu de repose-jambe, respectivement sont agencés par rapport au siège 10 pourtenir lieu de repose-pied.

Un autre exemple d'installation de stimulation 2 est illustré par la figure 1B. L'installation de stimulation 2 de la figure 1B se distingue de l'installation de stimulation 2 de la figure 1A en ce que les deuxième 8B et troisième systèmes de stimulation sont fixés au plancher 12 du véhicule, en regard de la partie basse du siège 10, ou à des pieds du siège 10, pour tenir lieu de repose-pied pour le siège 10. Sur cette figure 1B, le troisième système de stimulation n'est pas représenté.

Un autre exemple d'installation de stimulation 2 est illustré par la figure 1C. L'installation de stimulation 2 de la figure 1C se distingue de l'installation de stimulation 2 de la figure 1A en ce que les deuxième 8B et troisième systèmes de stimulation sont fixés à un élément d'un siège précédent 22 disposé immédiatement devant le siège 10 pourtenir lieu de repose-pied pour le siège 10, de sorte que les systèmes de stimulation soient accessibles au passager 6 installé dans le siège 10, comme illustré par la figure 1C. Sur cette figure 1C, le troisième système de stimulation n'est pas représenté.

Selon un autre exemple, l'installation de stimulation 2 est dépourvue de troisième système de stimulation. Dans ce cas, le deuxième système de stimulation 8B est configuré pour recevoir simultanément les deux pieds 20 du passager 6. Dans ce cas, et par analogie avec ce qui précède, le deuxième système de stimulation 8B est soit agencé au niveau du repose-pied 18 du siège 10, soit agencé par rapport au siège 10 pour tenir lieu de repose-pied, soit fixé au plancher 12 du véhicule, en regard de la partie basse du siège 10, ou à des pieds du siège 10, pour tenir lieu de repose-pied pour le siège 10, soit fixé à un élément du siège précédent 22 pour tenir lieu de repose-pied pour le siège 10.

L'installation de stimulation 2 comprend, en outre, une unité de commande (non représentée) configurée pour piloter le fonctionnement de chacun des systèmes de stimulation. En particulier, l'unité de commande est configurée pour piloter un dispositif d'actionnement de chacun des systèmes de stimulation. Un tel dispositif d'actionnement sera décrit ultérieurement.

En variante, l'invention prévoit également que l'installation de stimulation 2 comporte uniquement un système de stimulation destiné à recevoir des mollets 16 du passager 6, ou uniquement deux systèmes de stimulation destinés à recevoir chacun un pied 20 respectif du passager 6, ou un système de stimulation destiné à recevoir des mollets 16 du passager 6 et un unique système de stimulation destiné à recevoir simultanément les deux pieds 20 du passager 6, ou encore un unique système de stimulation destinés à recevoir simultanément les deux pieds 20 du passager 6.

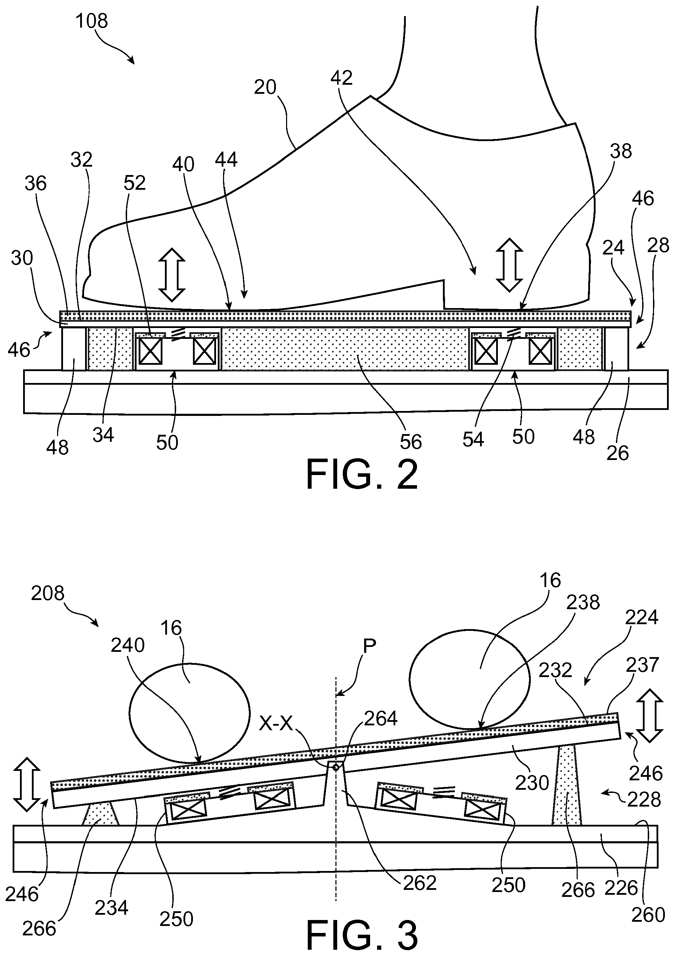

Un premier mode de réalisation d'un système de stimulation 108 selon l'invention est représenté sur la figure 2.

Un tel système de stimulation 108 est, de préférence, utilisé pour recevoir un pied 20 respectif du passager 6. Dans le cas où l'installation de stimulation 2 comporte à la fois le deuxième système de stimulation 8B et le troisième système de stimulation évoqués précédemment, le système de stimulation 108 est, notamment, destiné à jouer le rôle de l'un parmi le deuxième système de stimulation 8B et le troisième système de stimulation.

Le système de stimulation 108 comporte un dispositif d'appui 24, un support 26 et un dispositif d'actionnement 28.

Le support 26, de préférence rigide, est configuré pour solidariser le système de stimulation 108 au véhicule, notamment au plancher 12 du véhicule, ou à un siège 10, par exemple un repose-jambe 14 du siège 10, un repose-pied 18 du siège 10 ou un autre élément de la partie basse d'un siège 10.

En variante, le support 26 est formé par le plancher 12 du véhicule.

Le dispositif d'appui 24 est destiné à recevoir le pied 20 respectif du passager 6.

Le dispositif d'appui 24 est agencé en regard du support 26. En outre, le dispositif d'appui 24 est mobile par rapport au support 26, comme cela sera décrit ultérieurement.

Le dispositif d'appui 24 comporte un plateau 30. Le plateau 30 présente, par exemple, la forme d'une plaque. Le plateau 30 est réalisé dans un matériau déformable élastique, c'est-à-dire propre à retrouver sa forme initiale suite à une déformation.

Le plateau 30 s'étend en regard du support 26.

Le plateau 30 comporte une face supérieure 32 et une face inférieure 34 orientée à l'opposé de la face supérieure 32. La face inférieure 34 est orientée vers le support 26.

De préférence, la face supérieure 32 est munie d'un revêtement 36 antidérapant, par exemple collé à la face supérieure 32.

Lorsque le système de stimulation 108 est destiné à recevoir un pied 20 respectif du passager 6, la face supérieure 32 est destinée à être orientée vers le haut lorsque le système de stimulation 108 est installé à bord du véhicule, de sorte que le passager 6 puisse placer son pied 20 sur la face supérieure 32.

Le plateau 30 définit un premier organe d'appui 38 et un deuxième organe d'appui 40 du dispositif d'appui 24 comme des zones respectives du plateau 30.

Chacun parmi le premier organe d'appui 38 et le deuxième organe d'appui 40 est destiné à recevoir une partie distincte du même pied 20 du passager 6. En particulier, le premier organe d'appui 38 est agencé pour recevoir un talon 42 du passager 6. En outre, le deuxième organe d'appui 40 est agencé pour recevoir une partie plantaire distale 44 du pied 20 du passager 6.

Comme évoqué précédemment, le plateau 30 est déformable et susceptible d'adopter une pluralité de formes.

En particulier, le plateau 30 est susceptible de se déformer de façon à ce que le premier organe d'appui 38 occupe une première position ou une deuxième position respectives, la deuxième position étant distincte de la première position.

Dans la première position du premier organe d'appui 38, le premier organe d'appui 38 se trouve à une première distance du support 26. Dans la deuxième position du premier organe d'appui 38, le premier organe d'appui 38 se trouve à une deuxième distance du support 26 strictement inférieure à la première distance.

De façon similaire, le plateau 30 est susceptible de se déformer de façon à ce que le deuxième organe d'appui 40 occupe une première position ou une deuxième position respectives, la deuxième position étant distincte de la première position.

Dans la première position du deuxième organe d'appui 40, le deuxième organe d'appui 40 se trouve à une première distance du support 26. Dans la deuxième position du deuxième organe d'appui 40, le deuxième organe d'appui 40 se trouve à une deuxième distance du support 26 strictement inférieure à la première distance.

En outre, le plateau 30 est tel que chacun parmi le premier organe d'appui 38 et le deuxième organe d'appui 40 comporte au moins un élément magnétique.

Par « élément magnétique », il est entendu, au sens de la présente invention, un élément réalisé dans un matériau présentant des propriétés magnétiques, c'est-à-dire un matériau ferromagnétique ou un matériau paramagnétique. Un tel élément magnétique est donc susceptible de ressentir une force d'attraction vers un aimant ou un électroaimant lorsqu'il est soumis à un champ magnétique généré par l'aimant ou l'électroaimant.

Par exemple, l'élément magnétique est une plaque en fer, ou encore un aimant.

Le dispositif d'appui 24 est fixé au support 26, de préférence au niveau de bords périphériques 46 du dispositif d'appui 24, par exemple au moyen de colonnettes rigides 48, ou encore d'un cadre rigide.

Le dispositif d'actionnement 28 est configuré pour entraîner le dispositif d'appui 24 en mouvement par rapport au support 26. Plus précisément, le dispositif d'actionnement 28 est configuré pour entraîner le dispositif d'appui 24 en mouvement par une déformation locale par rapport au support 26.

Le dispositif d'actionnement 28 comporte au moins un électroaimant 50. Plus précisément, pour chaque organe d'appui 38, 40, le dispositif d'actionnement 28 comprend un électroaimant 50 correspondant.

Chaque électroaimant 50 est agencé entre le plateau 30 et le support 26. Plus précisément, chaque électroaimant 50 est agencé entre le plateau 30 et le support 26 au niveau de l'organe d'appui 38, 40 correspondant.

Chaque électroaimant 50 est orienté de façon à exercer une force magnétique d'attraction sur l'élément magnétique de l'organe d'appui 38, 40 correspondant, en fonction d'un état d'alimentation de l'électroaimant 50 en courant électrique.

Par exemple, comme illustré par la figure 2, chaque électroaimant est fixé au support 26.

Par exemple, chaque électroaimant 50 est du type « ventouse électromagnétique ». De préférence, chaque électroaimant 50 est muni d'une bande élastique 52 et/ou d'un ressort 54, agencés entre l'électroaimant 50 et le plateau 30.

La bande élastique 54 est destinée à amortir des chocs résultant d'une entrée en contact de l'organe d'appui 38, 40 avec l'électroaimant 50 lors d'une déformation du plateau 30 sous l'effet de la force magnétique exercée par l'électroaimant 50 sur l'élément magnétique de l'organe d'appui 38, 40.

En outre, le ressort 52 est destiné à favoriser un décollement entre l'organe d'appui 38, 40 et l'électroaimant 50 à l'issue d'une interruption de la force magnétique exercée par l'électroaimant 50 sur l'élément magnétique de l'organe d'appui 38, 40.

De préférence, le volume délimité par le plateau 30 et le support 26, et qui n'est pas occupé par les électroaimants 50, est garni d'une mousse déformable 56, destinée à s'opposer à un affaissement du plateau 30 sous l'effet du poids exercé par le passager 6 sur le système de stimulation 108, en particulier lorsque le système de stimulation 108 est inactif.

Selon une variante non illustrée, l'électroaimant 50 est solidaire de l'organe d'appui 38, 40 correspondant. Dans ce cas, c'est le support 26 qui est muni d'éléments magnétiques, l'électroaimant 50 étant agencé pour interagir avec l'élément magnétique correspondant pour faire passer l'organe d'appui 38, 40 correspondant vers sa première position ou sa deuxième position en fonction d'un état d'alimentation de l'électroaimant 50 en courant électrique.

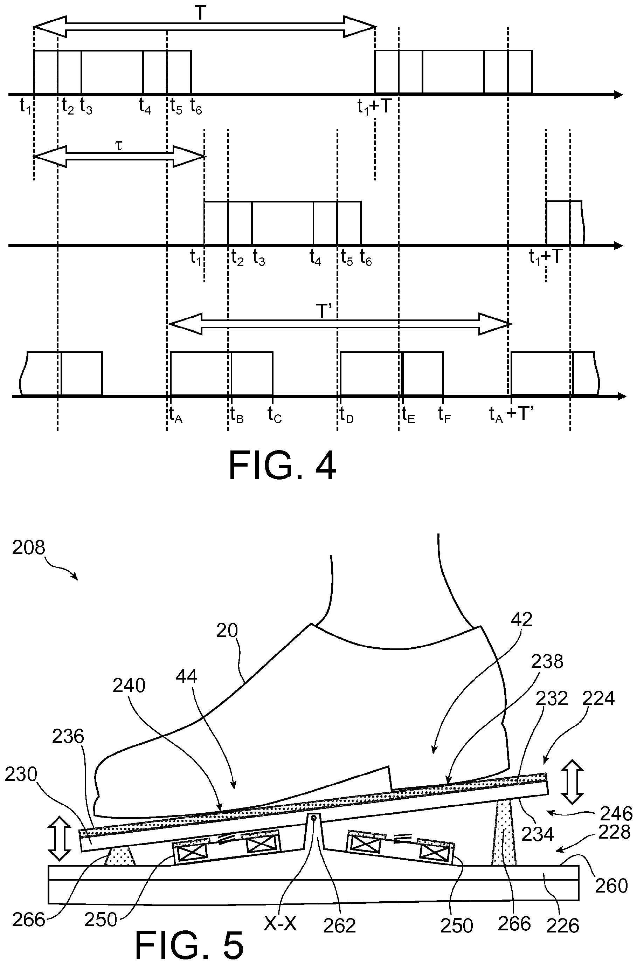

Le fonctionnement du système de stimulation 108 va maintenant être décrit, en référence aux figures 2 et 4.

Sur la figure 4, la première ligne de temps est relative au fonctionnement du système de stimulation 108.

Au repos, le système de stimulation 108 adopte une position de référence. La position de référence correspond à la position adoptée par le système de stimulation 108 lorsqu'aucun électroaimant 50 n'est alimenté. En particulier, dans une telle position de référence, chaque organe d'appui 38, 40 présente la première position correspondante. Dans ce cas, le plateau 30 présente une forme dite « au repos », par exemple globalement plane.

Puis, lors d'un instant t₁, l'électroaimant 50 disposé sous le premier organe d'appui 38 est alimenté en courant électrique. Ceci a pour effet d'entraîner, entre l'instant t₁ et un instant ultérieur t₂, une déformation locale du plateau 30, dans laquelle le premier organe d'appui 38 passe de la première position correspondante à la deuxième position correspondante, c'est-à-dire se rapproche du support 26.

Puis, lors de l'instant t₂, l'alimentation en courant électrique de l'électroaimant 50 disposé sous le premier organe d'appui 38 est interrompue. Ceci a pour effet d'entraîner, entre l'instant t₂ et un instant ultérieur t₃, un relâchement local du plateau 30, c'est-à-dire l'éloignement du premier organe d'appui 38 du support 26 et le retour du premier organe d'appui 38 de la deuxième position correspondante vers la première position correspondante. Un tel relâchement du plateau 30 est dû à l'élasticité du plateau 30, et éventuellement également dû à l'action du ressort 52.

A l'issue de l'instant t₃, le système de stimulation 108 se trouve dans la position de référence.

Puis, durant un temps de latence compris entre l'instant t₃ et un instant ultérieur t₄, l'alimentation en courant électrique des électroaimants 50, en particulier de l'électroaimant 50 disposé sous le premier organe d'appui 38, demeure interrompue, de sorte que le système de stimulation 108 reste dans la position de référence.

La durée entre les instants t₁ et t₂ et la durée entre les instants t₄ et t₃ sont chacune de l'ordre de la dizaine à la centaine de millisecondes.

La durée entre les instants t₁ et t₄ vaut environ T/4 à T/3, T étant une durée totale de cycle décrite ultérieurement.

La durée entre les instants t₁ et t₄ est représentative d'un temps de pose du pied, c'est-à-dire une durée s'écoulant, au cours de la marche, de l'impact de la pose du talon à l'impact de la pose de la partie plantaire distale du même pied. Le temps de pose du pied varie en fonction de la cadence du pas.

Puis, lors de l'instant t₄, l'électroaimant 50 disposé sous le deuxième organe d'appui 40 est alimenté en courant électrique. Ceci a pour effet d'entraîner, entre l'instant t₄ et un instant ultérieur ts, une déformation locale du plateau 30, dans laquelle le deuxième organe d'appui 40 passe de la première position correspondante à la deuxième position correspondante, c'est-à-dire se rapproche du support 26.

Puis, lors de l'instant t₅, l'alimentation en courant électrique de l'électroaimant 50 disposé sous le deuxième organe d'appui 40 est interrompue. Ceci a pour effet d'entraîner, entre l'instant t₅ et un instant ultérieur t₆, un relâchement local du plateau 30, c'est-à-dire l'éloignement du deuxième organe d'appui 40 du support 26 et le retour du deuxième organe d'appui 40 de la deuxième position correspondante vers la première position correspondante. Un tel relâchement du plateau 30 est dû à l'élasticité du plateau 30, et éventuellement également dû à l'action du ressort 52.

A l'issue de l'instant t₆, le système de stimulation 108 se trouve de nouveau dans la position de référence.

Puis, durant un temps de latence compris entre l'instant t₆ et un instant ultérieur t₁+T, l'alimentation en courant électrique des électroaimants 50, en particulier de l'électroaimant 50 disposé sous le deuxième organe d'appui 40 demeure interrompue, de sorte que le système de stimulation 108 reste dans la position de référence.

Les étapes entre l'instant t₁ et l'instant t₁+T forment un cycle du système de stimulation 108. Le cycle est répété au cours du temps, l'instant t₁+T étant assimilé à un nouvel instant t₁ à chaque nouveau cycle.

T représente la durée totale du cycle. De préférence, la durée T est choisie pour représenter la durée usuelle d'un pas ou d'une foulée, soit entre 0,2 s (seconde) et 10 s.

Il est envisagé que la valeur de la durée T soit variable, par exemple dépendante d'un mode de fonctionnement choisi du système de stimulation 108, ou de l'installation de stimulation 2, ou encore réglable par le passager 6.

Du point de vue du passager 6, les déformations-relâchements successifs du plateau 30, dits « impulsions », sont ressentis comme des impacts sous le pied 20, au niveau du talon 42 et de la partie plantaire distale 44, similaires à l'impact au sol du talon 42 et de la partie plantaire distale 44 du passager 6 lorsqu'il marche ou qu'il court. De telles impulsions simulent la marche chez le passager 6, une telle simulation de la marche étant apte à prévenir et/ou soulager un engourdissement des membres inférieurs 4 du passager 6. En outre, de telles impulsions sont susceptibles de provoquer une réaction réflexe secondaire chez le passager 6, également apte à prévenir et/ou soulager un engourdissement des membres inférieurs 4 du passager 6.

L'installation de stimulation 2 comporte un deuxième système de stimulation 108, destiné à recevoir un autre pied 20 respectif du passager 6. Dans ce cas, le deuxième système de stimulation 108 joue le rôle de l'autre parmi le deuxième système de stimulation 8B et le troisième système de stimulation évoqués précédemment.

Le fonctionnement du deuxième système de stimulation 108 est identique au fonctionnement décrit précédemment.

De préférence, les durées entre les actionnements des organes d'appui 38, 40 du deuxième système de stimulation 108 sont identiques aux durées entre les actionnements correspondants des organes d'appui 38, 40 du premier système de stimulation 108.

Les deux systèmes de stimulation 108 sont configurés pour fonctionner de façon synchronisée. Plus précisément, l'instant t₁ marquant le début d'un cycle du deuxième système de stimulation 108 est temporellement distant d'une durée τ par rapport à l'instant t₁ marquant le début d'un cycle correspondant du premier système de stimulation 108, comme illustré par la figure 4, sur laquelle la deuxième ligne de temps est relative au fonctionnement du deuxième système de stimulation 108.

τ est la durée séparant le début du cycle de l'un des deux systèmes de stimulation 108 de l'autre des deux systèmes de stimulation 108. De préférence, τ est égal à T/2.

Un système de stimulation 208 selon un deuxième mode de réalisation de l'invention est représenté sur la figure 3.

Un tel système de stimulation 208 est, par exemple, utilisé pour recevoir les mollets 16 du passager 6. Dans ce cas, le système de stimulation 208 joue le rôle du système de stimulation 8A évoqué précédemment en référence aux figures 1A à 1C. Sur la figure 3, les mollets 16 du passager 6 sont schématiquement représentés en coupe transversale (c'est-à-dire une coupe selon un plan orthogonal à un axe d'un tibia ou d'un péroné du passager 6).

Le système de stimulation 208 comporte un dispositif d'appui 224, un support 226 et un dispositif d'actionnement 228.

Le support 226 est configuré pour solidariser le système de stimulation 208 au véhicule ou à un siège 10 du véhicule.

En variante, le support 226 est formé par le repose-jambe 14 d'un siège 10 du véhicule.

Le dispositif d'appui 224 est monté mobile par rapport au support 226, comme cela sera décrit ultérieurement.

Dans le cas où le système de stimulation 208 joue le rôle du système de stimulation 8A, le dispositif d'appui 224 est destiné à recevoir les mollets 16 du passager 6.

En outre, le dispositif d'actionnement 228 est configuré pour mettre en mouvement le dispositif d'appui 224 par rapport au support 226.

Le dispositif d'appui 224 comporte un plateau 230, de préférence rigide.

Le plateau 230 s'étend en regard du support 226.

Le plateau 230 comporte une face supérieure 232 et une face inférieure 234 orientée à l'opposé de la face supérieure 232. La face inférieure 234 est orientée vers le support 226.

La face supérieure 232 est destinée à être orientée dans une direction avant définie par le siège 10, lorsque le système de stimulation 208 est installé à bord du véhicule pour recevoir les mollets 16 du passager 6.

Avantageusement, pour améliorer le confort du système de stimulation 208, la face supérieure 232 est munie d'un revêtement 237 réalisé dans un matériau mou.

Le plateau 230 présente un axe de rotation X-X, destiné à permettre un pivotement du plateau 230 par rapport au support 226, autour de l'axe X-X.

L'axe de rotation X-X appartient à un plan médian P non matériel qui, lorsque le système de stimulation 208 est installé à bord du véhicule, est un plan vertical se superposant avantageusement à un plan de symétrie du siège 10 recevant le passager 6.

Par « plan de symétrie », il est entendu, au sens de la présente invention, un plan général de symétrie, c'est-à-dire un plan orthogonal à la fois à un plan d'assise et à un plan dans lequel s'étend un dossier du siège 10.

Le plateau 230 définit un premier organe d'appui 238 et un deuxième organe d'appui 240 du dispositif d'appui 224, comme des zones respectives du plateau 230. Plus précisément, le premier organe d'appui 238 et le deuxième organe d'appui 240 sont définis comme les parties respectives du plateau 230 qui sont disposées de part et d'autre du plan médian P. Il en résulte que le premier organe d'appui 238 et le deuxième organe d'appui 240 sont montés conjointement pivotants par rapport au support 226 autour de l'axe X-X.

Chacun parmi le premier organe d'appui 238 et le deuxième organe d'appui 240 est destiné à recevoir un mollet 16 respectif du passager 6.

En outre, le plateau 230 est tel que chacun parmi le premier organe d'appui 238 et le deuxième organe d'appui 240 comporte au moins un élément magnétique.

Le support 226, avantageusement rigide, est configuré pour solidariser le système de stimulation 208 au véhicule, notamment à un repose-jambe 14 du siège 10. En variante, le support 226 est le repose-jambe 14 du siège 10.

Le support 226 comporte une surface supérieure 260, un ergot 262 et une tige 264.

La surface supérieure 260 est orientée vers la face inférieure 234 du plateau 230.

L'ergot 262 fait saillie au niveau d'une zone centrale de la surface supérieure 260 du support 226.

La tige 264 coopère avec le dispositif d'appui 224. Plus précisément, la tige 264 traverse l'ergot 262 et une pièce correspondante du dispositif d'appui 224, la tige 264 s'étendant selon l'axe X-X pour former une liaison pivot d'axe X-X.

Le dispositif d'actionnement 228 comporte au moins un électroaimant 250. Plus précisément, pour chacun des premier et deuxième organes d'appui 238, 240, le dispositif d'actionnement 228 comprend un électroaimant 250 correspondant.

Pour chacun parmi le premier organe d'appui 238 et le deuxième organe d'appui 240, l'électroaimant 250 correspondant est agencé entre le plateau 230 et le support 226, au niveau de l'autre parmi le premier organe d'appui 238 et le deuxième organe d'appui 240.

Pour chacun parmi le premier organe d'appui 238 et le deuxième organe d'appui 240, l'électroaimant 250 correspondant est orienté de façon à exercer une force magnétique d'attraction sur l'élément magnétique de l'autre parmi le premier organe d'appui 238 et le deuxième organe d'appui 240, en fonction d'un état d'alimentation de l'électroaimant 250 en courant électrique.

Par exemple, chaque électroaimant 250 est similaire aux électroaimants 50 du système de stimulation 108 décrit précédemment.

En outre, chaque électroaimant 250 est, par exemple, fixé au support 226, comme illustré par la figure 3.

En variante, au moins un électroaimant 250 est fixé à la face inférieure 234 du plateau 230. Dans ce cas, le support 226 est muni d'au moins un élément magnétique, l'électroaimant 250 étant agencé pour interagir avec l'élément magnétique correspondant pour faire passer l'organe d'appui 238, 240 correspondant vers sa première position ou sa deuxième position en fonction d'un état d'alimentation de l'électroaimant 250 en courant électrique.

Avantageusement, le système de stimulation 208 comporte également des organes de sollicitation élastiques 266 disposés entre le support 226 et le plateau 230. De préférence, les organes de sollicitation élastiques 266 sont agencés au niveau des bords périphériques 246 du plateau 230 qui sont le plus éloignés de l'axe de rotation X-X.

Le fonctionnement du système de stimulation 208 va maintenant être décrit, en référence aux figures 3 et 4.

Sur la figure 4, la troisième ligne de temps est relative au fonctionnement du système de stimulation 208.

Au repos, le système de stimulation 208 adopte une position de référence. La position de référence correspond à la position adoptée par le système de stimulation 208 lorsqu'aucun électroaimant 250 n'est alimenté. En particulier, dans une telle position de référence, le plateau 230 est sensiblement parallèle au support 226.

Puis, lors d'un instant t_{A}, l'électroaimant 250 disposé sous le deuxième organe d'appui 240 est alimenté en courant électrique. Ceci a pour effet d'entraîner, entre l'instant t_{A} et un instant ultérieur t_{B}, le basculement du plateau 230 autour de l'axe de rotation X-X, et l'éloignement du premier organe d'appui 238 du support 226.

En d'autres termes, le premier organe d'appui 238 passe d'une première position, dans laquelle le premier organe d'appui se trouve à une première distance du support 226, une deuxième position dans laquelle le premier organe d'appui 238 se trouve à une deuxième distance du support 226 strictement supérieure à la première distance.

Ceci a également pour effet de conduire à une déformation élastique des organes de sollicitation élastiques 266.

Puis, lors de l'instant t_{B}, l'alimentation en courant électrique de l'électroaimant 50 disposé sous le deuxième organe d'appui 240 est interrompue. Ceci a pour effet d'entraîner, entre l'instant t_{B} et un instant ultérieur te, un retour du plateau 230 vers la position de référence, c'est-à-dire rapprochement du premier organe d'appui 238 du support 226, notamment sous l'effet d'efforts de rappel exercés par les organes de sollicitation élastiques 266 préalablement déformés. En d'autres termes, le premier organe d'appui 238 se déplace de la deuxième position correspondante vers la première position correspondante.

A l'issue de l'instant t_{C}, le système de stimulation 208 se trouve dans la position de référence.

Puis, durant un temps de latence compris entre l'instant t_{C} et un instant ultérieur t_{D}, l'alimentation en courant électrique des électroaimants, notamment de l'électroaimant 250 disposé sous le deuxième organe d'appui 240, demeure interrompue, de sorte que le système de stimulation 208 reste dans la position de référence. Notamment, le premier organe d'appui 238 reste dans la première position correspondante.

Puis, lors de l'instant t_{D}, l'électroaimant 250 agencé sous le premier organe d'appui 238 est alimenté en courant électrique. Ceci a pour effet d'entraîner, entre l'instant t_{D} et un instant ultérieur t_{E}, le basculement opposé du plateau 230 autour de l'axe de rotation X-X, et l'éloignement du deuxième organe d'appui 240 du support 226.

En d'autres termes, le deuxième organe d'appui 240 passe d'une première position, dans laquelle le deuxième organe d'appui 240 se trouve à une première distance du support 226, une deuxième position dans laquelle le deuxième organe d'appui 240 se trouve à une deuxième distance du support 226 strictement supérieure à la première distance.

Ceci a également pour effet de conduire à une déformation élastique des organes de sollicitation élastiques 266.

Puis, lors de l'instant t_{E}, l'alimentation en courant électrique de l'électroaimant 250 disposé sous le premier organe d'appui 238 est interrompue. Ceci a pour effet d'entraîner, entre l'instant t_{E} et un instant ultérieur t_{F}, un retour du plateau 230 vers la position de référence, c'est-à-dire rapprochement du deuxième organe d'appui 240 du support 226, notamment sous l'effet d'efforts de rappel exercés par les organes de sollicitation élastiques 266 préalablement déformés. En d'autres termes, le deuxième organe d'appui 240 se déplace de la deuxième position correspondante vers la première position correspondante.

A l'issue de l'instant t_{F}, le système de stimulation 208 se trouve de nouveau dans la position de référence.

Puis, durant un temps de latence compris entre l'instant t_{F} et un instant ultérieur t_{A}+T', l'alimentation en courant électrique des électroaimants, notamment de l'électroaimant 250 disposé sous le premier organe d'appui 238, demeure interrompue, de sorte que le système de stimulation 208 reste dans la position de référence. Notamment, le deuxième organe d'appui 240 reste dans la première position correspondante.

Les étapes entre l'instant t_{A} et l'instant t_{A}+T' forment un cycle du système de stimulation 208. Le cycle est répété au cours du temps, l'instant t_{A}+T' étant assimilé à un nouvel instant t_{A} à chaque nouveau cycle.

De préférence, la durée entre les instants t_{C} et t_{D} est égale à la durée entre les instants t_{F} et t_{A}+T'. De préférence encore, la durée entre les instants t_{A} et t_{C} est égale à la durée entre les instants t_{D} et t_{F}, et la durée entre les instants t_{A} et t_{B} est égale à la durée entre les instants t_{D} et t_{E}.

T' représente la durée totale du cycle. De préférence, la durée T' est choisie pour représenter la durée usuelle d'un pas ou d'une foulée, soit entre 0,2 s et 10 s.

De préférence, la durée entre les instants t_{A} et t_{D} est égale à T'/2.

Avantageusement, dans le cas où l'installation de stimulation comprend un système de stimulation 208 en guise de premier système de stimulation 8A, et deux systèmes de stimulation 108 en guise de deuxième et troisième systèmes de stimulation respectivement, l'instant t_{A} est compris entre les instants t₅ et t₆ du cycle de l'un des deux systèmes de stimulation 108, par exemple confondu avec l'instant t₅ du cycle de l'un des deux systèmes de stimulation 108. En outre, l'instant t_{B} est supérieur ou égal à l'instant t₂ du cycle de l'autre des deux systèmes de stimulation 108, par exemple compris entre les instants t₂ et t₃ du cycle de l'autre des deux systèmes de stimulation 108, comme illustré par la figure 4. Avantageusement, les durées de cycles T et T' sont égales.

Plus précisément, pour un instant t₅ associé au système de stimulation 108 destiné à recevoir le pied 20 droit du passager 6, l'instant t_{A} associé correspond à l'activation de l'électroaimant 250 disposé sous l'organe d'appui qui est destiné à recevoir le mollet 16 gauche du passager 6, de façon à provoquer une poussée au niveau du mollet 16 droit du passager 6, assimilable à l'avancée du mollet droit ressentie par le passager au moment de décoller sa partie plantaire distale droite du sol, pendant la marche.

En outre, pour un instant t₅ associé au système de stimulation 108 destiné à recevoir le pied 20 gauche du passager 6, l'instant t_{D} associé correspond à l'activation de l'électroaimant 250 disposé sous l'organe d'appui qui est destiné à recevoir le mollet 16 droit du passager 6, de façon à provoquer une poussée au niveau du mollet 16 gauche du passager 6, assimilable à l'avancée du mollet gauche ressentie par le passager au moment de décoller sa partie plantaire distale gauche du sol, pendant la marche.

Comme illustré par la figure 5, le système de stimulation 208 précédemment décrit est également susceptible d'être utilisé pour recevoir un pied 20 respectif d'un passager 6. En d'autres termes, le système de stimulation 208 est propre à jouer le rôle de l'un des deuxième ou troisième systèmes de stimulation décrits précédemment.

Dans ce cas, le système de stimulation 208 est destiné à être agencé de sorte que l'axe de rotation X-X forme un angle aigu, par exemple inférieur ou égal à 45°, avec une normale au plan de symétrie du siège 10 recevant le passager 6, lorsque le système de stimulation 208 est installé à bord du véhicule.

En outre, dans ce cas, le système de stimulation 208 est destiné à être agencé de sorte que la face supérieure 232 du plateau 230 soit orientée vers le haut lorsque le système de stimulation 208 est installé à bord du véhicule, de sorte que le passager 6 puisse placer son pied 20 sur la face supérieure 232.

En outre, dans ce cas, le revêtement souple est remplacé par un revêtement antidérapant 236.

En fonctionnement, le système de stimulation 208 est actionné selon des cycles successifs similaires aux cycles du système de stimulation 108 de la figure 3.

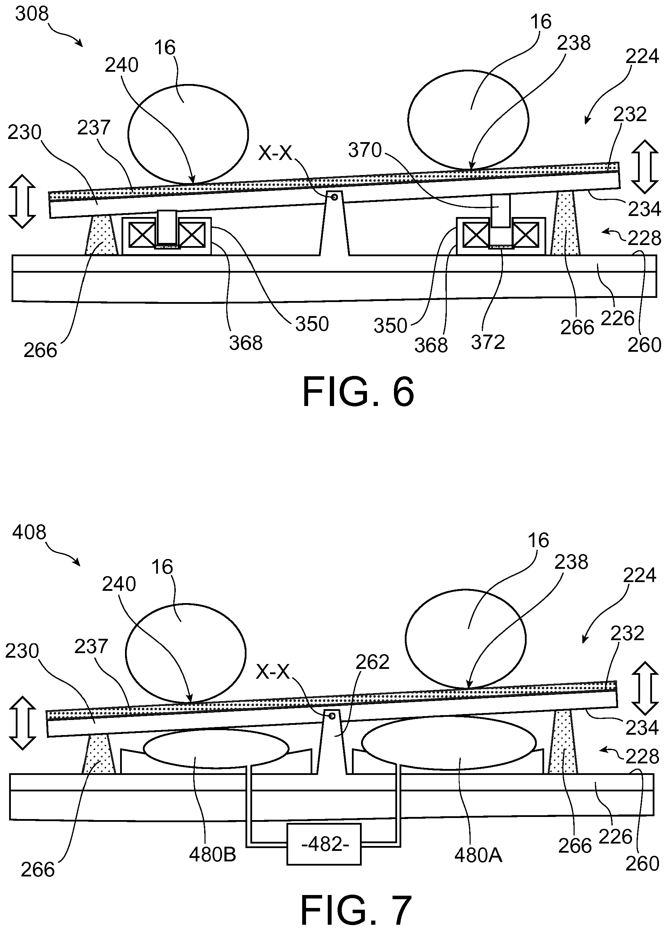

Selon une variante 308 du système de stimulation 208 de la figure 3, illustrée par la figure 6, les électroaimants du type « ventouse électromagnétique » précédemment décrits sont remplacés par des électroaimants 350 du type « à noyau plongeur et à culasse magnétique ».

Chaque électroaimant comporte une culasse 368, fixée à l'un parmi le support 226 et le plateau 230, et un noyau 370 fixé à l'autre parmi le support 226 et le plateau 230. En outre, le noyau 370 de chaque électroaimant 350 est agencé pour pouvoir coulisser dans la culasse 368 correspondante.

Dans ce cas, le noyau 370 forme l'élément magnétique associé aux organes 238, 240 ou au support 226.

Avantageusement, chaque électroaimant 350 est muni d'un élément amortisseur 372, par exemple agencé dans la culasse 368, contre lequel le noyau 370 est destiné à buter lorsqu'il arrive en fin de course. Un tel élément amortisseur 372 réduit le bruit acoustique généré par chaque électroaimant 350 lors de son fonctionnement.

Selon une variante 408 du système de stimulation 208 de la figure 3, illustrée par la figure 7, chaque électroaimant est remplacé par un ballonnet 480A, 480B.

Les ballonnets 480A, 480B sont associés à une pompe 482 configurée pour gonfler et dégonfler, alternativement, les ballonnets 480A, 480B pour obtenir le basculement du plateau 230 dans un sens puis dans l'autre. En d'autres termes, la pompe 482 est configurée pour faire circuler un fluide entre chaque ballonnet 480A, 480B et la pompe 482 afin de causer une déformation du ballonnet 480A, 480B, la déformation d'un ballonnet 480A, 480B étant destinée à faire passer chaque organe d'appui 238, 240 vers la première position correspondante ou la deuxième position correspondante en fonction d'un état de remplissage du ballonnet 480A, 480B associé en fluide.

Par exemple, la pompe 482 est configurée pour faire circuler le fluide entre les ballonnets 480A, 480B.

En fonctionnement, pour entraîner un premier basculement du plateau 230 destiné à éloigner le premier organe d'appui 238 du support 226, la pompe 482 gonfle le ballonnet 480A agencé entre le premier organe d'appui 238 et le support 226, et dégonfle le ballonnet 480B disposé entre le deuxième organe d'appui 240 et le support 226. Dans ce cas, le deuxième organe d'appui 240 se rapproche du support 226.

A l'inverse, pour entraîner un deuxième basculement du plateau 230 destiné à éloigner le deuxième organe d'appui 240 du support 226, la pompe 482 gonfle le ballonnet 480B agencé entre le deuxième organe d'appui 240 et le support 226, et dégonfle le ballonnet 480A disposé entre le premier organe d'appui 238 et le support 226. Dans ce cas, le premier organe d'appui 238 se rapproche du support 226.

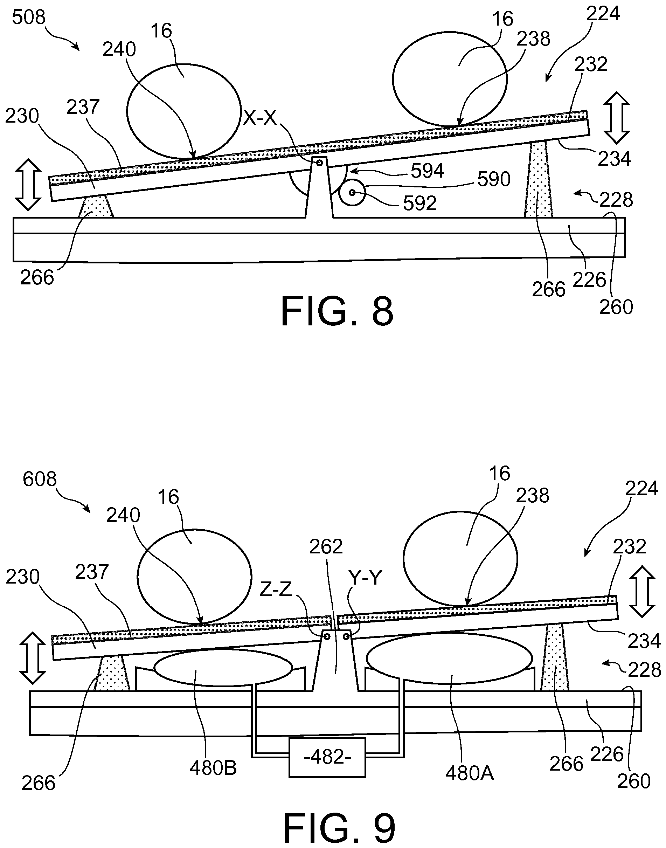

Selon une variante 508 du système de stimulation 208 de la figure 3, illustrée par la figure 8, le dispositif d'actionnement 228 est dépourvu d'électroaimant.

Le dispositif d'actionnement 228 comporte un moteur 590 dont le rotor 592 est couplé au plateau 230, par exemple au moyen d'un réducteur de vitesse 594.

En fonctionnement, pour entraîner un premier basculement du plateau 230 destiné à éloigner le premier organe d'appui 238 du support 226, le moteur 590 est commandé pour tourner dans un premier sens.

A l'inverse, pour entraîner un deuxième basculement du plateau 230 destiné à éloigner le deuxième organe d'appui 240 du support 226, le moteur 590 est commandé pour tourner dans un deuxième sens opposé au premier sens.

Sur la figure 9 est représentée une variante 608 du système de stimulation 208 de la figure 7.

Dans ce cas, chacun parmi le premier organe d'appui 238 et le deuxième organe d'appui 240 présente un axe de rotation propre Y-Y, Z-Z, résultant de la coopération d'une tige respective 264A, 264B avec l'ergot 262. Dans ce cas, les organes d'appui 238, 240 sont aptes à être mis en mouvement indépendamment l'un de l'autre. De préférence, l'angle entre les axes de rotations Y-Y et Z-Z est faible, c'est-à-dire inférieur à 45°, par exemple nul.

Les ballonnets 480A, 480B et la pompe 482 sont susceptibles d'être remplacés par l'un quelconques des dispositifs d'actionnements 228 décrits précédemment. Dans ce cas, si le dispositif d'actionnement 228 comporte des électroaimants 250 du type « ventouse électromagnétique », c'est-à-dire des électroaimants 250 uniquement aptes à exercer une force d'attraction sur les organes d'appui, c'est-à-dire destinée à rapprocher les organes d'appui 238, 240 du support 226, le système de stimulation 608 sera, de préférence, destiné à recevoir les pieds 20 du passager 6. Dans ce cas, le retour à la position de repos est assuré par les organes de sollicitation élastiques 266.

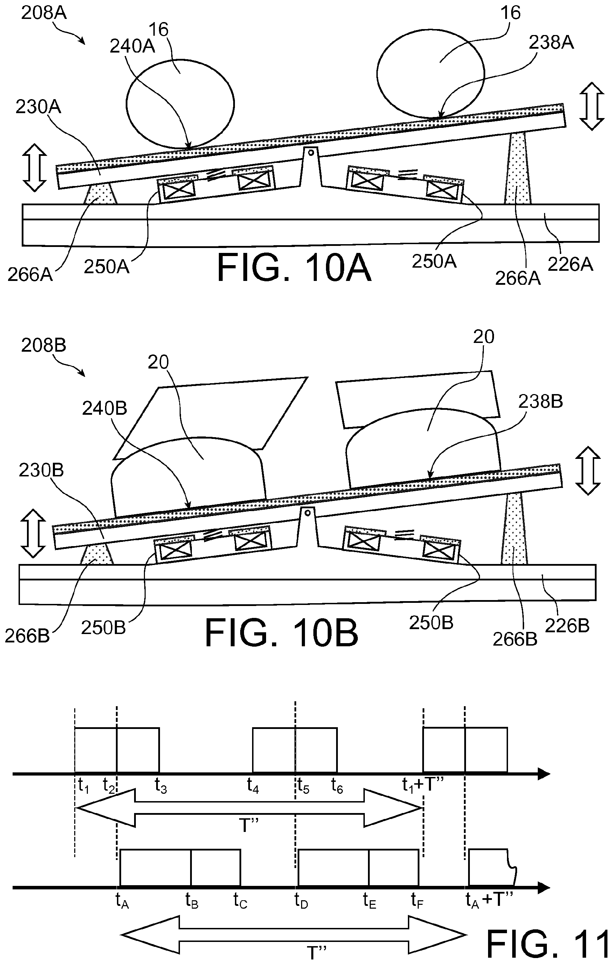

Il est également envisagé que le système de stimulation 208 précédemment décrit (ou l'une de ses variantes 308, 408, 508, 608) soit utilisé pour recevoir conjointement les deux pieds 20 du passager 6, comme illustré par la figure 10B. En d'autres termes, le système de stimulation 208 joue simultanément le rôle des deuxième et troisième systèmes de stimulation décrits en référence aux figures 1A-1C.

Dans ce cas, le système de stimulation 208 est destiné à être agencé de sorte que le plan médian P soit sensiblement parallèle au plan de symétrie du siège 10 recevant le passager 6, par exemple confondu avec le plan de symétrie du siège 10.

En outre, le système de stimulation 208 est destiné à être agencé de sorte que la face supérieure 232 du plateau 230 soit orientée vers le haut lorsque le système de stimulation 208 est installé à bord du véhicule, de sorte que le passager 6 puisse placer ses deux pieds 20 sur la face supérieure 232.

Le fonctionnement d'une installation de stimulation 2 comportant un premier système de stimulation 208 et un deuxième système de stimulation 208 va maintenant être décrit en référence aux figures 10A et 10B.

Sur la figure 11, la première ligne de temps est relative au fonctionnement du système de stimulation 208B destiné à recevoir simultanément les pieds 20 du passager 6, comme illustré par la figure 10B. Par la suite, les organes se rapportant à un tel système de stimulation 208B associé aux pieds 20 seront désignés par une référence se terminant par B.

En outre, la deuxième ligne de temps est relative au fonctionnement du système de stimulation 208A destiné à recevoir les mollets 16 du passager 6, comme illustré par la figure 10A. Par la suite, les organes se rapportant à un tel système de stimulation 208A associé aux mollets 16 seront désignés par une référence se terminant par A.

Au repos, les systèmes de stimulation 208A, 208B adoptent chacun une position de référence. La position de référence correspond à la position adoptée par le système de stimulation 208A, 208B lorsqu'aucun électroaimant 250A, 250B n'est alimenté. En particulier, dans une telle position de référence, chaque plateau 230A, 230B est sensiblement parallèle au support 226A, 226B correspondant.

Lors d'un instant t₁, l'électroaimant 250B disposé sous le premier organe d'appui 238B, sur lequel repose le pied droit du passager 6, est alimenté en courant électrique. Ceci a pour effet d'entraîner, entre l'instant t₁ et un instant ultérieur t₂, le basculement du plateau 230B autour de son axe de rotation, et le rapprochement du premier organe d'appui 238B du support 226B. Ceci a également pour effet de conduire à une déformation élastique des organes de sollicitation élastiques 266B. En d'autres termes, le premier organe d'appui 238B se déplace de la première position correspondante vers la deuxième position correspondante.

Puis, lors de l'instant t₂, l'alimentation en courant électrique de l'électroaimant 250B disposé sous le premier organe d'appui 238B est interrompue. Ceci a pour effet d'entraîner, entre l'instant t₂ et un instant ultérieur t₃, un retour du plateau 230B vers la position de référence, c'est-à-dire l'éloignement du premier organe d'appui 238B du support 226B, notamment sous l'effet d'efforts de rappel exercés par les organes de sollicitation élastiques 266B préalablement déformés. En d'autres termes, le premier organe d'appui 238B se déplace de la deuxième position correspondante vers la première position correspondante.

A l'issue de l'instant t₃, le système de stimulation 208B se trouve dans sa position de référence.

Puis, durant un temps de latence compris entre l'instant t₃ et un instant ultérieur t₄, l'alimentation en courant électrique des électroaimants 250B, notamment de l'électroaimant 250B disposé sous le premier organe d'appui 238B, demeure interrompue, de sorte que le système de stimulation 208B reste dans la position de référence. Notamment, le premier organe d'appui 238B reste dans la première position correspondante.

Puis, lors de l'instant t₄, l'électroaimant 250B disposé sous le deuxième organe d'appui 240B, sur lequel repose le pied gauche du passager, est alimenté en courant électrique. Ceci a pour effet d'entraîner, entre l'instant t₄ et un instant ultérieur t₅, le basculement du plateau 230B autour de son axe de rotation, et le rapprochement du deuxième organe d'appui 240B du support 226B. Ceci a également pour effet de conduire à une déformation élastique des organes de sollicitation élastiques 266B. En d'autres termes, le deuxième organe d'appui 240B se déplace de la première position correspondante vers la deuxième position correspondante.

Puis, lors de l'instant t₅, l'alimentation en courant électrique de l'électroaimant 250B disposé sous le deuxième organe d'appui 240B est interrompue. Ceci a pour effet d'entraîner, entre l'instant t₅ et un instant ultérieur t₆, un retour du plateau 230B vers la position de référence, c'est-à-dire l'éloignement du deuxième organe d'appui 240B du support 226B, notamment sous l'effet d'efforts de rappel exercés par les organes de sollicitation élastiques 266B préalablement déformés. En d'autres termes, le deuxième organe d'appui 240B se déplace de la deuxième position correspondante vers la première position correspondante.

A l'issue de l'instant t₆, le système de stimulation 208B se trouve dans sa position de référence.

Puis, durant un temps de latence compris entre l'instant t₆ et un instant ultérieur t₁+T", l'alimentation en courant électrique des électroaimants 250B, notamment de l'électroaimant 250B disposé sous le deuxième organe d'appui 240B, demeure interrompue, de sorte que le système de stimulation 208B reste dans la position de référence. Notamment, le deuxième organe d'appui 240B reste dans la première position correspondante.

En outre, lors d'un instant t_{A} compris entre les instants t₂ et t₃, par exemple égal à t₂, l'électroaimant 250A disposé sous le deuxième organe d'appui 240A, contre lequel repose le mollet gauche du passager, est alimenté en courant électrique. Ceci a pour effet d'entraîner, entre l'instant t_{A} et un instant ultérieur t_{B}, le basculement du plateau 230A autour de son axe de rotation, et l'éloignement du premier organe d'appui 238A, contre lequel repose le mollet droit du passager, par rapport au support 226A. Ceci a également pour effet de conduire à une déformation élastique des organes de sollicitation élastiques 266A. En d'autres termes, le premier organe d'appui 238A se déplace de la première position correspondante vers la deuxième position correspondante.

Puis, lors de l'instant t_{B}, l'alimentation en courant électrique de l'électroaimant 250A disposé sous le deuxième organe d'appui 240A est interrompue. Ceci a pour effet d'entraîner, entre l'instant t_{B} et un instant ultérieur te, un retour du plateau 230A vers la position de référence, c'est-à-dire le rapprochement du premier organe d'appui 238A du support 226A, notamment sous l'effet d'efforts de rappel exercés par les organes de sollicitation élastiques 266A préalablement déformés. En d'autres termes, le premier organe d'appui 238A se déplace de la deuxième position correspondante vers la première position correspondante.

A l'issue de l'instant t_{C}, le système de stimulation 208A se trouve dans sa position de référence.

Les instants t_{B} et t_{C} sont, de préférence, compris entre les instants t₂ et t₄, par exemple entre les instants t₃ et t₄.

Puis, durant un temps de latence compris entre l'instant t_{C} et un instant ultérieur t_{D}, l'alimentation en courant électrique des électroaimants 250A, notamment de l'électroaimant 250A disposé sous le deuxième organe d'appui 240A, demeure interrompue, de sorte que le système de stimulation 208A reste dans la position de référence. Notamment, le premier organe d'appui 238A reste dans la première position correspondante.

L'instant t_{D} est compris entre les instants t₄ et t₅, par exemple égal à l'instant t₅.

Puis, lors de l'instant t_{D}, l'électroaimant 250A disposé sous le premier organe d'appui 238A est alimenté en courant électrique. Ceci a pour effet d'entraîner, entre l'instant t_{D} et un instant ultérieur t_{E}, le basculement du plateau 230A autour de son axe de rotation, et l'éloignement du deuxième organe d'appui 240A du support 226A. Ceci a également pour effet de conduire à une déformation élastique des organes de sollicitation élastiques 266A. En d'autres termes, le deuxième organe d'appui 240A se déplace de la première position correspondante vers la deuxième position correspondante.

Puis, lors de l'instant t_{E}, l'alimentation en courant électrique de l'électroaimant 250A disposé sous le premier organe d'appui 238A est interrompue. Ceci a pour effet d'entraîner, entre l'instant t_{E} et un instant ultérieur t_{F}, un retour du plateau 230A vers la position de référence, c'est-à-dire le rapprochement du deuxième organe d'appui 240A du support 226A, notamment sous l'effet d'efforts de rappel exercés par les organes de sollicitation élastiques 266A préalablement déformés. En d'autres termes, le deuxième organe d'appui 240A se déplace de la deuxième position correspondante vers la première position correspondante.

A l'issue de l'instant t_{F}, le système de stimulation 208B se trouve dans sa position de référence.

Les instants t_{E} et t_{F} sont, de préférence, compris entre les instants t₅ et t₁+T", par exemple entre les instants t₆ et t₁+T".

Puis, durant un temps de latence compris entre l'instant t_{F} et un instant ultérieur t_{A}+T", l'alimentation en courant électrique des électroaimants 250A, notamment de l'électroaimant 250A disposé sous le premier organe d'appui 238A, demeure interrompue, de sorte que le système de stimulation 208A reste dans la position de référence. Notamment, le deuxième organe d'appui 240A reste dans la première position correspondante.

Concernant l'installation de stimulation comprenant les systèmes de stimulation 208A, 208B, les étapes entre les instants t_{A} et t_{A}+T", et entre les instants t₁ et t₁+T", forment deux cycle synchronisés. Les cycles sont répétés au cours du temps, l'instant t₁+T", respectivement t_{A}+T", étant assimilé à un nouvel instant t₁, respectivement un nouvel instant t_{A}, à chaque nouveau cycle.

T" représente la durée totale du cycle. De préférence, la durée T" est choisie de sorte que T"/2 représente la durée usuelle d'un pas ou d'une foulée, soit entre 0,2 s et 10 s.

## Revendications

1. Système de stimulation (8 ; 108 ; 208 ; 308 ; 408 ; 508 ; 608) des membres inférieurs (4) d'un passager (6) d'un véhicule, le système de stimulation (8 ; 108 ; 208 ; 308 ; 408 ; 508 ; 608) comportant un support (26 ; 226) et un dispositif d'appui (24 ; 224),
le dispositif d'appui (24; 224) comportant un premier et un deuxième organes d'appui (38, 40 ; 238, 240), chacun du premier et du deuxième organe d'appui (38, 40 ; 238, 240) étant destiné à recevoir une partie respective d'un membre inférieur (4) du passager (6),
chacun du premier et du deuxième organe d'appui (38, 40 ; 238, 240) étant mobile entre une première position correspondante, dans laquelle ledit organe d'appui (38, 40 ; 238, 240) se trouve à une première distance correspondante du support (26 ; 226), et une deuxième position correspondante, dans laquelle ledit organe d'appui (38, 40 ; 238, 240) se trouve à une deuxième distance correspondante du support (26 ; 226) distincte de la première distance,
le système de stimulation (8 ; 108; 208 ; 308 ; 408 ; 508 ; 608) étant **caractérisé en ce qu'**il comporte en outre une unité de commande et un dispositif d'actionnement (28 ; 228) ;
le dispositif d'actionnement étant configuré pour entraîner le dispositif d'appui (24 ; 224) en mouvement par rapport au support (26 ; 226),
l'unité de commande étant configurée pour piloter le dispositif d'actionnement (28 ; 228) afin de provoquer, successivement au cours du temps :
- l'amenée sélective de l'un des premier et deuxième organes d'appui (3840 ; 238, 240) de la première position correspondante vers la deuxième position correspondante, puis de la deuxième position correspondante vers la première position correspondante,
- puis, à l'issue d'un temps de latence non nul, l'amenée sélective de l'autre du premier et du deuxième organes d'appui (40, 38 ; 240, 238) de la première position correspondante vers la deuxième position correspondante, puis de la deuxième position correspondante vers la première position correspondante (40, 38 ; 240, 238).

2. Système de stimulation (8 ; 108 ; 208 ; 308 ; 608) selon la revendication 1, dans lequel, pour au moins un organe d'appui (38, 40 ; 238, 240) parmi le premier et le deuxième organe d'appui (38, 40 ; 238, 240), le dispositif d'actionnement (28 ; 228) comporte au moins un électroaimant (50 ; 250 ; 350) correspondant solidaire de l'un parmi le dispositif d'appui (24 ; 224) et le support (26 ; 226), et, pour chaque électroaimant (50 ; 250 ; 350), l'autre parmi le dispositif d'appui (24 ; 224) et le support (26 ; 226) comportant au moins un élément magnétique (370) correspondant, chaque élément magnétique (370) étant réalisé dans un matériau présentant des propriétés magnétiques, chaque électroaimant (50 ; 250 ; 350) étant agencé pour interagir avec l'élément magnétique (370) correspondant pour faire passer ledit organe d'appui (38, 40 ; 238, 240) correspondant vers la première position correspondante ou la deuxième position correspondante en fonction d'un état d'alimentation de l'électroaimant (50 ; 250 ; 350) en courant électrique.

3. Système de stimulation (408) selon la revendication 1 ou 2, dans lequel, pour au moins un organe d'appui (238, 240) parmi le premier et le deuxième organe d'appui (238, 240), le dispositif d'actionnement (228) comporte au moins un ballonnet (480A, 480B) et une pompe (482) reliée à chaque ballonnet (480A, 480B), chaque ballonnet (480A, 480B) étant agencé entre ledit organe d'appui (238, 240) correspondant et le support (226), la pompe (482) étant configurée pour faire circuler un fluide entre le ballonnet (480A, 480B) et la pompe (482) afin de causer une déformation du ballonnet (480A, 480B) destinée à faire passer ledit organe d'appui (238, 240) vers la première position correspondante ou la deuxième position correspondante en fonction d'un état de remplissage du ballonnet (280) en fluide.

4. Système de stimulation (208 ; 308 ; 408 ; 508 ; 608) selon l'une quelconque des revendications 1 à 3, comportant, pour chacun du premier et du deuxième organe d'appui (238, 240), au moins un organe de sollicitation élastique (266), chaque organe de sollicitation élastique (266) étant configuré pour, lorsque ledit organe d'appui (238, 240) correspondant se trouve dans la deuxième position, exercer sur ledit organe d'appui (238, 240) correspondant une force de rappel tendant à déplacer ledit organe d'appui (238, 240) de la deuxième position correspondante vers la première position correspondante.

5. Système de stimulation (508) selon l'une quelconque des revendications 1 à 4, dans lequel le dispositif d'actionnement (228) comporte un moteur (590) comprenant un axe (592) couplé à au moins un organe d'appui (238, 240) parmi le premier et le deuxième organe d'appui (238, 240), par exemple au moyen d'un réducteur (594), le moteur (590) étant configuré pour faire passer ledit organe d'appui (238, 240) vers la première position correspondante ou la deuxième position correspondante en fonction d'un sens de rotation du moteur (590).

6. Système de stimulation (108) selon l'une quelconque des revendications 1 à 5, dans lequel le dispositif d'appui comporte un plateau (30) réalisé dans un matériau déformable élastique et s'étendant en regard du support (26), chacun du premier et du deuxième organe d'appui (38, 40) étant défini comme une partie du plateau (30), le dispositif d'actionnement (28) étant configuré pour amener parmi le premier et le deuxième organe d'appui (38, 40; 238, 240)organe d'appui (38, 40) dans la première position correspondante par une déformation du plateau (30) pour conférer au plateau (30) une première forme, et dans la deuxième position correspondante par une autre déformation du plateau (30) pour conférer au plateau (30) une deuxième forme distincte de la première forme.

7. Système de stimulation (208 ; 308 ; 408 ; 508 ; 608) selon l'une quelconque des revendications 1 à 5, dans lequel chacun du premier et du deuxième organe d'appui (238, 240) est monté pivotant, par rapport au support (226), autour d'un axe de rotation (X-X ; Y-Y, Z-Z) correspondant.

8. Système de stimulation (208 ; 308 ; 408 ; 508) selon la revendication 7, dans lequel les premier et deuxième organes d'appui (238, 240) sont solidaires l'un de l'autre, les axes de rotation (X-X) respectifs des premier et deuxième organes d'appui (238, 240) étant confondus.

9. Installation de stimulation (2) comprenant un premier système de stimulation (8 ; 108 ; 208) selon l'une quelconque des revendications 1 à 8 et un deuxième système de stimulation (8 ; 108 ; 208) selon l'une quelconque des revendications 1 à 8,
chaque deuxième distance correspondant respectivement au premier et au deuxième organe d'appui (38,40 ; 238, 240) du premier système de stimulation (8 ; 108 ; 208) étant strictement inférieure à la première distance correspondant audit organe d'appui (38, 40 ; 238, 240) du premier système de stimulation (8 ; 108 ; 208),
la deuxième distance correspondant respectivement au premier et au deuxième organe d'appui (38, 40 ; 238, 240) du deuxième système de stimulation (8 ; 108 ; 208) étant strictement inférieure à la première distance correspondant audit organe d'appui (38, 40 ; 238, 240) du deuxième système de stimulation (8 ; 108 ; 208),
le premier système de stimulation (8 ; 108 ; 208) et le deuxième système de stimulation (8 ; 108 ; 208) étant agencés l'un par rapport à l'autre de sorte que :
• pour le premier système de stimulation (8 ; 108 ; 208) :
- le premier organe d'appui (38 ; 238) du premier système de stimulation (8 ; 108 ; 208) est agencé pour recevoir une partie d'un membre inférieur (4) du passager (6) qui est un talon (42) d'un pied (20) droit du passager (6) ; et
- le deuxième organe d'appui (40; 240) du premier système de stimulation (8 ; 108 ; 208) est agencé pour recevoir une partie d'un membre inférieur (4) du passager (6) qui est une partie plantaire distale (44) du pied (20) droit du passager (6) ;
• pour le deuxième système de stimulation (8 ; 108 ; 208) :
- le premier organe d'appui (38 ; 238) du deuxième système de stimulation (8 ; 108 ; 208) est agencé pour recevoir une partie d'un membre inférieur (4) du passager (6) qui est un talon (42) d'un pied (20) gauche du passager (6) ; et
- le deuxième organe d'appui (40; 240) du deuxième système de stimulation (8 ; 108 ; 208) est agencé pour recevoir une partie d'un membre inférieur (4) du passager (6) qui est une partie plantaire distale (44) du pied (20) gauche du passager (6).

10. Installation de stimulation (2) selon la revendication 9, comprenant, en outre, un troisième système de stimulation (8 ; 208 ; 308 ; 408 ; 508 ; 608) selon l'une quelconque des revendications 1 à 8,
chaque deuxième distance correspondant respectivement au premier et au deuxième organe d'appui (238, 240) du troisième système de stimulation (8 ; 208 ; 308 ; 408 ; 508 ; 608) étant strictement supérieure à la première distance correspondant audit organe d'appui (238, 240) du troisième système de stimulation (8 ; 208 ; 308 ; 408 ; 508 ; 608),
le troisième système de stimulation (8 ; 208 ; 308 ; 408 ; 508 ; 608) étant disposé par rapport au premier système de stimulation (8 ; 108 ; 208) et au deuxième système de stimulation (8 ; 108 ; 208) de sorte que :
- le premier organe d'appui (238) du troisième système de stimulation (8 ; 208 ; 308 ; 408 ; 508 ; 608) est agencé pour recevoir une partie d'un membre inférieur (4) du passager (6) qui est un mollet (16) droit du passager (6) ; et
- le deuxième organe d'appui (240) du troisième système de stimulation (8 ; 208 ; 308 ; 408 ; 508 ; 608) est agencé pour recevoir une partie d'un membre inférieur (4) du passager (6) qui est un mollet (16) gauche du passager (6).

11. Procédé de commande d'une installation de stimulation (2) selon la revendication 9 ou 10, comportant la mise en œuvre d'une pluralité de cycles successifs, chaque cycle comportant :
• un premier déplacement du premier système de stimulation (8 ; 108 ; 208) comprenant :
- amenée sélective du premier organe d'appui (38 ; 238) du premier système de stimulation (8 ; 108 ; 208) vers la deuxième position correspondante ; puis
- amenée du premier organe d'appui (38 ; 238) du premier système de stimulation (8 ; 108 ; 208) vers la première position correspondante ; puis
- maintien du premier organe d'appui (38 ; 238) du premier système de stimulation (8 ; 108 ; 208) dans la première position correspondante pendant un premier temps de latence prédéterminé ;
• un deuxième déplacement du premier système de stimulation (8 ; 108 ; 208), ultérieur au premier déplacement du premier système de stimulation (8 ; 108 ; 208), comprenant :
- amenée sélective du deuxième organe d'appui (40 ; 240) du premier système de stimulation (8 ; 108 ; 208) vers la deuxième position correspondante ; puis
- amenée du deuxième organe d'appui (40; 240) du premier système de stimulation (8 ; 108 ; 208) vers la première position correspondante ; puis
- maintien du deuxième organe d'appui (40; 240) du premier système de stimulation (8 ; 108 ; 208) dans la première position correspondante pendant un deuxième temps de latence prédéterminé ;
• un premier déplacement du deuxième système de stimulation (8 ; 108 ; 208), ultérieur à l'amenée du deuxième organe d'appui (40 ; 240) du premier système de stimulation (8 ; 108 ; 208) vers la première position correspondante, comprenant :
- amenée sélective du premier organe d'appui (38 ; 238) du deuxième système de stimulation (8 ; 108 ; 208) vers la deuxième position correspondante ; puis
- amenée du premier organe d'appui (38 ; 238) du deuxième système de stimulation (8 ; 108 ; 208) vers la première position correspondante ; puis
- maintien du premier organe d'appui (38 ; 238) du deuxième système de stimulation (8 ; 108 ; 208) dans la première position correspondante pendant un troisième temps de latence prédéterminé ;
• un deuxième déplacement du deuxième système de stimulation (8 ; 108 ; 208), ultérieur au premier déplacement du deuxième système de stimulation (8 ; 108 ; 208), comprenant :
- amenée sélective du deuxième organe d'appui (40; 240) du deuxième système de stimulation (8 ; 108 ; 208) vers la deuxième position correspondante ; puis
- amenée du deuxième organe d'appui (40 ; 240) du deuxième système de stimulation (8 ; 108 ; 208) vers la première position correspondante ; puis
- maintien du deuxième organe d'appui (40; 240) du deuxième système de stimulation (8 ; 108 ; 208) dans la première position correspondante pendant un quatrième temps de latence prédéterminé,
le premier temps de latence prédéterminé et le troisième temps de latence prédéterminé étant, de préférence, égaux,
le deuxième temps de latence prédéterminé et le quatrième temps de latence prédéterminé étant, de préférence, égaux.

12. Procédé de commande selon la revendication 11 lorsqu'elle dépend de la revendication 10, chaque cycle comportant, en outre :
• à partir de l'amenée du deuxième organe d'appui (40 ; 240) du premier système de stimulation (8 ; 108 ; 208) vers la deuxième position correspondante :
- amenée du premier organe d'appui (238) du troisième système de stimulation (8 ; 208 ; 308 ; 408 ; 508 ; 608) vers la deuxième position correspondante ; puis
- amenée du premier organe d'appui (238) du troisième système de stimulation (8 ; 208 ; 308 ; 408 ; 508 ; 608) vers la première position correspondante ; puis
- maintien du premier organe d'appui (238) du troisième système de stimulation (8 ; 208 ; 308 ; 408 ; 508 ; 608) dans la première position correspondante pendant un cinquième temps de latence prédéterminé ;
• à partir de l'amenée du deuxième organe d'appui (40; 240) du deuxième système de stimulation (8 ; 108; 208) vers la deuxième position correspondante :
- amenée du deuxième organe d'appui (240) du troisième système (8 ; 208 ; 308 ; 408 ; 508 ; 608) de stimulation vers la deuxième position correspondante ; puis
- amenée du deuxième organe d'appui (240) du troisième système de stimulation (8 ; 208 ; 308 ; 408 ; 508 ; 608) vers la première position correspondante ; puis
- maintien du deuxième organe d'appui (240) du troisième système de stimulation (8 ; 208 ; 308 ; 408 ; 508 ; 608) dans la première position correspondante pendant un sixième temps de latence prédéterminé ;
l'amenée du premier organe d'appui (238) du troisième système de stimulation (8 ; 208 ; 308 ; 408 ; 508 ; 608) vers la première position correspondante étant, de préférence, mise en œuvre à partir de l'amenée du premier organe d'appui (38 ; 238) du deuxième système de stimulation (8; 108; 208) vers la deuxième position correspondante,
l'amenée du deuxième organe d'appui (240) du troisième système de stimulation (8 ; 208 ; 308 ; 408 ; 508 ; 608) vers la première position correspondante étant, de préférence, mise en œuvre à partir de l'amenée du premier organe d'appui (38 ; 238) du premier système de stimulation (8 ; 108 ; 208) vers la deuxième position correspondante,
le cinquième temps de latence prédéterminé et le sixième temps de latence prédéterminé étant, de préférence, égaux.

13. Installation de stimulation (2) comprenant un premier système de stimulation (208A) selon la revendication 8 et un deuxième système de stimulation (208B) selon l'une quelconque des revendications 1 à 8,
chaque deuxième distance correspondant respectivement au premier et deuxième organe d'appui (238A, 240A) du premier système de stimulation (208A) étant strictement supérieure à la première distance correspondant audit organe d'appui (238A, 240A) du premier système de stimulation (208A),
chaque deuxième distance correspondant respectivement au premier et au deuxième organe d'appui (238B, 240B) du deuxième système de stimulation (208B, 240B) étant strictement inférieure à la première distance correspondant audit organe d'appui (238B, 240B) du deuxième système de stimulation (208B),
le premier système de stimulation (208A) et le deuxième système de stimulation (208B) étant agencés l'un par rapport à l'autre de sorte que :
• pour le premier système de stimulation (208A) :
- le premier organe d'appui (238A) du premier système de stimulation (208A) est agencé pour recevoir une partie d'un membre inférieur du passager qui est un mollet (16) droit du passager ; et
- le deuxième organe d'appui (240A) du premier système de stimulation (208A) est agencé pour recevoir une partie d'un membre inférieur du passager qui est un mollet (16) gauche du passager ;
• pour le deuxième système de stimulation (208B) :
- le premier organe d'appui (238B) du deuxième système de stimulation (208B) est agencé pour recevoir une partie d'un membre inférieur du passager qui est un pied (20) droit du passager ; et
- le deuxième organe d'appui (240B) du deuxième système de stimulation (208B) est agencé pour recevoir une partie d'un membre inférieur du passager qui est un pied (20) gauche du passager.

14. Procédé de commande d'une installation de stimulation selon la revendication 13, comportant la mise en œuvre d'une pluralité de cycles successifs, chaque cycle comportant :
• un premier déplacement du deuxième système de stimulation (208B), comprenant :
- amenée sélective du premier organe d'appui (238B) du deuxième système de stimulation (208B) vers la deuxième position correspondante ; puis
- amenée du premier organe d'appui (238B) du deuxième système de stimulation (208B) vers la première position correspondante ; puis
- maintien du premier organe d'appui (238B) du deuxième système de stimulation (208B) dans la première position correspondante pendant un premier temps de latence prédéterminé ;
• un deuxième déplacement du deuxième système de stimulation (208B), ultérieur au premier déplacement du deuxième système de stimulation (208B), comprenant :
- amenée sélective du deuxième organe d'appui (240B) du deuxième système de stimulation (208B) vers la deuxième position correspondante ; puis
- amenée du deuxième organe d'appui (240B) du deuxième système de stimulation (208B) vers la première position correspondante ; puis
- maintien du deuxième organe d'appui (240B) du deuxième système de stimulation (208B) dans la première position correspondante pendant un deuxième temps de latence prédéterminé,
• à partir de l'amenée du premier organe d'appui (238B) du deuxième système de stimulation (208B) vers la première position correspondante :
- amenée sélective du premier organe d'appui (238A) du premier système de stimulation (208A) vers la deuxième position correspondante ; puis
- amenée du premier organe d'appui (238A) du premier système de stimulation (208A) vers la première position correspondante ; puis
- maintien du premier organe d'appui (238A) du premier système de stimulation (208) dans la première position correspondante pendant un troisième temps de latence prédéterminé ;
• à partir de l'amenée du deuxième organe d'appui (240B) du deuxième système de stimulation (208B) vers la première position correspondante :
- amenée du deuxième organe d'appui (240A) du premier système de stimulation (208A) vers la deuxième position correspondante ; puis
- amenée du deuxième organe d'appui (240A) du premier système de stimulation (208A) vers la première position correspondante ; puis
- maintien du deuxième organe d'appui (240A) du premier système de stimulation (208A) dans la première position correspondante pendant un quatrième temps de latence prédéterminé ;
le premier temps de latence prédéterminé et le deuxième temps de latence prédéterminé étant, de préférence, égaux,
le troisième temps de latence prédéterminé et le quatrième temps de latence prédéterminé étant, de préférence, égaux,
l'amenée du deuxième organe d'appui (240B) du deuxième système de stimulation (208B) vers la deuxième position correspondante étant, de préférence, mise en œuvre après l'amenée du premier organe d'appui (238A) du premier système de stimulation (208A) vers la première position correspondante,
l'amenée du premier organe d'appui (238B) du deuxième système de stimulation (208B) vers la deuxième position correspondante étant, de préférence, mise en œuvre après l'amenée du deuxième organe d'appui (240A) du premier système de stimulation (208A) vers la première position correspondante.

15. Siège (10) de véhicule équipé d'un système de stimulation (8 ; 108 ; 208 ; 308 ; 408 ; 508 ; 608) selon l'une quelconque des revendications 1 à 8, le système de stimulation (8 ; 108 ; 208 ; 308 ; 408 ; 508 ; 608) étant fixé à un repose-pied (18) du siège (10), à un repose-jambe (14) du siège (10), à des parties basses du siège (10) ou à des pieds du siège, ou équipé d'une installation de stimulation (2) selon l'une quelconque des revendication 10, 11 ou 13, chaque système de stimulation (8 ; 108 ; 208 ; 308 ; 408 ; 508 ; 608) de l'installation de stimulation (2) étant fixé à un repose-pied (18) du siège (10), à un repose-jambe (14) du siège (10), à des parties basses du siège (10) ou à des pieds du siège (10).

16. Véhicule comprenant au moins un siège selon la revendication 15, ou comprenant au moins un siège (10) et un système de stimulation (8 ; 108 ; 208 ; 308 ; 408 ; 508 ; 608) selon l'une quelconque des revendications 1 à 8 correspondant, le système de stimulation (8 ; 108 ; 208 ; 308 ; 408 ; 508 ; 608) étant fixé à un plancher (12) du véhicule, en regard d'une partie basse du siège (10), ou à un élément d'un siège précédent (22) disposé immédiatement devant le siège (10), ou comprenant au moins un siège (10) et une installation de stimulation (2) selon l'une quelconque des revendication 10, 11 ou 13 correspondante, le système de stimulation (8 ; 108 ; 208 ; 308 ; 408 ; 508 ; 608) de l'installation de stimulation (2) étant fixé à un plancher (12) du véhicule, en regard d'une partie basse du siège (10), ou à un élément d'un siège précédent (22) disposé immédiatement devant le siège (10).

## Patentansprüche

1. Stimulationssystem (8; 108; 208; 308; 408; 508; 608) der unteren Gliedmaßen (4) eines Insassen (6) eines Fahrzeugs, wobei das Stimulationssystem (8; 108; 208; 308; 408; 508; 608) einen Träger (26; 226) und eine Stützvorrichtung (24; 224) beinhaltet,
wobei die Stützvorrichtung (24; 224) ein erstes und ein zweites Stützorgan (38, 40; 238, 240) beinhaltet, wobei jedes von dem ersten und zweiten Stützorgan (38, 40; 238, 240) dazu bestimmt ist, einen jeweiligen Teil einer unteren Gliedmaße (4) des Insassen (6) aufzunehmen,
wobei sich jedes von dem ersten und zweiten Stützorgan (38, 40; 238, 240) zwischen einer entsprechenden ersten Position, in der sich das Stützorgan (38, 40; 238, 240) in einem ersten entsprechenden Abstand von dem Träger (26; 226) befindet, und einer entsprechenden zweiten Position, in der sich das Stützorgan (38, 40; 238, 240) in einem entsprechenden zweiten Abstand von dem Träger (26; 226) befindet, der sich von dem ersten Abstand unterscheidet, beweglich ist,
wobei das Stimulationssystem (8; 108; 208; 308; 408; 508; 608) **dadurch gekennzeichnet ist, dass** es weiter eine Steuereinheit und eine Betätigungsvorrichtung (28; 228) beinhaltet;
wobei die Betätigungsvorrichtung konfiguriert ist, um die Stützvorrichtung (24; 224) in Bezug auf den Träger (26; 226) in Bewegung anzutreiben,
wobei die Steuereinheit konfiguriert ist, um die Betätigungsvorrichtung (28; 228) anzusteuern, um im Laufe der Zeit nacheinander Folgendes zu bewirken:
- das selektive Zuführen des einen von dem ersten und zweiten Stützorgan (3840; 238, 240) von der entsprechenden ersten Position in die entsprechende zweite Position, danach von der entsprechenden zweiten Position in die entsprechende erste Position,
- danach, nach Ablauf einer Latenzzeit ungleich null, das selektive Zuführen des anderen von dem ersten und zweiten Stützorgan (40, 38; 240, 238) von der entsprechenden ersten Position in die entsprechende zweite Position, danach von der entsprechenden zweiten Position in die entsprechende erste Position (40, 38; 240, 238).

2. Stimulationssystem (8; 108; 208; 308; 608) nach Anspruch 1, wobei die Betätigungsvorrichtung (28; 228) für mindestens ein Stützorgan (38, 40; 238, 240) des ersten und des zweiten Stützorgans (38, 40; 238, 240) mindestens einen entsprechenden Elektromagneten (50; 250; 350) beinhaltet, derfest mit einem von der Stützvorrichtung (24; 224) und dem Träger (26; 226) verbunden ist, und für jeden Elektromagneten (50; 250; 350) die/der andere von der Stützvorrichtung (24; 224) und dem Träger (26; 226) mindestens ein entsprechendes Magnetelement (370) beinhaltet, wobei jedes Magnetelement (370) aus einem Werkstoff gefertigt ist, der magnetische Eigenschaften aufweist, wobei jeder Elektromagnet (50; 250; 350) angeordnet ist, um mit dem entsprechenden Magnetelement (370) zusammenzuwirken, um das entsprechende Stützorgan (38, 40; 238, 240) in Abhängigkeit von einem Versorgungszustand des Elektromagneten (50; 250; 350) mit elektrischem Strom in die entsprechende erste Position oder die entsprechende zweite Position übergehen zu lassen.

3. Stimulationssystem (408) nach Anspruch 1 oder 2, wobei die Betätigungsvorrichtung (228) für mindestens ein Stützorgan (238, 240) von dem ersten und dem zweiten Stützorgan (238, 240) mindestens einen Luftsack (480A, 480B) und eine Pumpe (482) beinhaltet, die mit jedem Luftsack (480A, 480B) verbunden ist, wobei jeder Luftsack (480A, 480B) zwischen dem entsprechenden Stützorgan (238, 240) und dem Träger (226) angeordnet ist, wobei die Pumpe (482) konfiguriert ist, um ein Fluid zwischen dem Luftsack (480A, 480B) und der Pumpe (482) zirkulieren zu lassen, um eine Verformung des Luftsacks (480A, 480B) zu bewirken, die dazu bestimmt ist, das Stützorgan (238, 240) in Abhängigkeit von einem Füllzustand des Luftsacks (280) mit Fluid in die erste entsprechende Position oder die zweite entsprechende Position übergehen zu lassen.

4. Stimulationssystem (208; 308; 408; 508; 608) nach einem der Ansprüche 1 bis 3, das für jedes von dem ersten und dem zweiten Stützorgan (238, 240) mindestens ein elastisches Vorspannorgan (266) beinhaltet, wobei jedes elastische Vorspannorgan (266) konfiguriert ist, um, wenn sich das entsprechende Stützorgan (238, 240) in der zweiten Position befindet, auf das entsprechende Stützorgan (238, 240) eine Rückstellkraft auszuüben, die dazu tendiert, das Stützorgan (238, 240) von der entsprechenden zweiten Position in die entsprechende erste Position zu bewegen.

5. Stimulationssystem (508) nach einem der Ansprüche 1 bis 4, wobei die Betätigungsvorrichtung (228) einen Motor (590) beinhaltet, der eine Achse (592) umfasst, die, beispielsweise anhand eines Getriebes (594), an mindestens ein Stützorgan (238, 240) von dem ersten und dem zweiten Stützorgan (238, 240) gekoppelt ist, wobei der Motor (590) konfiguriert ist, um das Stützorgan (238, 240) in Abhängigkeit von einer Drehrichtung des Motors (590) in die entsprechende erste Position oder die entsprechende zweite Position übergehen zu lassen.

6. Stimulationssystem (108) nach einem der Ansprüche 1 bis 5, wobei die Stützvorrichtung eine Scheibe (30) beinhaltet, die aus einem elastischen verformbaren Werkstoff gefertigt ist, und sich gegenüber dem Träger (26) erstreckt, wobei jedes von dem ersten und dem zweiten Stützorgan (38, 40) als ein Teil der Scheibe (30) definiert ist, wobei die Betätigungsvorrichtung (28) konfiguriert ist, um von dem ersten und dem zweiten Stützorgan (38, 40; 238, 240) jenes Stützorgan (38, 40) durch eine Verformung der Scheibe (30) in die entsprechende erste Position zuzuführen, um der Scheibe (30) eine erste Form zu verleihen, und durch eine andere Verformung der Scheibe (30) in die entsprechende zweite Position, um der Scheibe (30) eine zweite Form zu verleihen, die sich von der ersten Form unterscheidet.

7. Stimulationssystem (208; 308; 408; 508; 608) nach einem der Ansprüche 1 bis 5, wobei jedes von dem ersten und dem zweiten Stützorgan (238, 240) in Bezug auf den Träger (226) um eine entsprechende Drehachse (X-X; Y-Y, Z-Z) herum schwenkbar montiert ist.

8. Stimulationssystem (208; 308; 408; 508) nach Anspruch 7, wobei das erste und zweite Stützorgan (238, 240) fest miteinander verbunden sind, wobei die jeweiligen Drehachsen (X-X) des ersten und zweiten Stützorgans (238, 240) zusammenfallend sind.

9. Stimulationseinrichtung (2), die ein erstes Stimulationssystem (8; 108; 208) nach einem der Ansprüche 1 bis 8 und ein zweites Stimulationssystem (8; 108; 208) nach einem der Ansprüche 1 bis 8 umfasst,
wobei jeder zweite Abstand, der jeweils dem ersten und dem zweiten Stützorgan (38, 40; 238, 240) des ersten Stimulationssystems (8; 108; 208) entspricht, streng kleiner als der erste Abstand ist, der dem Stützorgan (38,40; 238, 240) des ersten Stimulationssystems (8; 108; 208) entspricht,
wobei der zweite Abstand, der jeweils dem ersten und dem zweiten Stützorgan (38, 40; 238, 240) des zweiten Stimulationssystems (8; 108; 208) entspricht, streng kleiner als der erste Abstand ist, der dem Stützorgan (38,40; 238, 240) des zweiten Stimulationssystems (8; 108; 208) entspricht,
wobei das erste Stimulationssystem (8; 108; 208) und das zweite Stimulationssystems (8; 108; 208) derart in Bezug zum anderen angeordnet sind, dass:
• für das erste Stimulationssystem (8; 108; 208):
- das erste Stützorgan (38; 238) des ersten Stimulationssystems (8; 108; 208) angeordnet ist, um einen Teil einer unteren Gliedmaße (4) des Insassen (6) aufzunehmen, welche eine Ferse (42) eines rechten Fußes (20) des Insassen (6) ist; und
- das zweite Stützorgan (40; 240) des ersten Stimulationssystems (8; 108; 208) angeordnet ist, um einen Teil einer unteren Gliedmaße (4) des Insassen (6) aufzunehmen, welche ein distaler Sohlenteil (44) des rechten Fußes (20) des Insassen (6) ist;
• für das zweite Stimulationssystem (8; 108; 208):
- das erste Stützorgan (38; 238) des zweiten Stimulationssystems (8; 108; 208) angeordnet ist, um einen Teil einer unteren Gliedmaße (4) des Insassen (6) aufzunehmen, welche eine Ferse (42) eines linken Fußes (20) des Insassen (6) ist; und
- das zweite Stützorgan (40; 240) des zweiten Stimulationssystems (8; 108; 208) angeordnet ist, um einen Teil einer unteren Gliedmaße (4) des Insassen (6) aufzunehmen, welche ein distaler Sohlenteil (44) des linken Fußes (20) des Insassen (6) ist.

10. Stimulationseinrichtung (2) nach Anspruch 9, die weiter ein drittes Stimulationssystem (8; 208; 308; 408; 508; 608) nach einem der Ansprüche 1 bis 8 umfasst,
wobei jeder zweite Abstand, der jeweils dem ersten und dem zweiten Stützorgan (238, 240) des dritten Stimulationssystems (8; 208; 308; 408; 508; 608) entspricht, streng größer als der erste Abstand ist, der dem Stützorgan (238, 240) des dritten Stimulationssystems (8; 208; 308; 408; 508; 608) entspricht,
wobei das dritte Stimulationssystem (8; 208; 308; 408; 508; 608) in Bezug auf das erste Stimulationssystem (8; 108; 208) und das zweite Stimulationssystems (8; 108; 208) derart angeordnet ist, dass:
- das erste Stützorgan (238) des dritten Stimulationssystems (8; 208; 308; 408; 508; 608) angeordnet ist, um einen Teil einer unteren Gliedmaße (4) des Insassen (6) aufzunehmen, welche eine rechte Wade (16) des Insassen (6) ist; und
- das zweite Stützorgan (240) des dritten Stimulationssystems (8; 208; 308; 408; 508; 608) angeordnet ist, um einen Teil einer unteren Gliedmaße (4) des Insassen (6) aufzunehmen, welche eine linke Wade (16) des Insassen (6) ist.

11. Verfahren zum Steuern einer Stimulationseinrichtung (2) nach Anspruch 9 oder 10, welches die Umsetzung einer Vielzahl von aufeinanderfolgenden Zyklen beinhaltet, wobei jeder Zyklus Folgendes beinhaltet:
• eine erste Bewegung des ersten Stimulationssystems (8; 108; 208), umfassend:
- das selektive Zuführen des ersten Stützorgans (38; 238) des ersten Stimulationssystems (8; 108; 208) in die entsprechende zweite Position; danach
- Zuführen des ersten Stützorgans (38; 238) des ersten Stimulationssystems (8; 108; 208) in die entsprechende erste Position; danach
- Festhalten des ersten Stützorgans (38; 238) des ersten Stimulationssystems (8; 108; 208) in der entsprechenden ersten Position während einer zuvor bestimmten ersten Latenzzeit;
• eine zweite Bewegung des ersten Stimulationssystems (8; 108; 208) nach der ersten Bewegung des ersten Stimulationssystems (8; 108; 208), umfassend:
- das selektive Zuführen des zweiten Stützorgans (40; 240) des ersten Stimulationssystems (8; 108; 208) in die entsprechende zweite Position; danach
- Zuführen des zweiten Stützorgans (40; 240) des ersten Stimulationssystems (8; 108; 208) in die entsprechende erste Position; danach
- Festhalten des zweiten Stützorgans (40; 240) des ersten Stimulationssystems (8; 108; 208) in der entsprechenden ersten Position während einer zuvor bestimmten zweiten Latenzzeit;
• eine erste Bewegung des zweiten Stimulationssystems (8; 108; 208) nach dem Zuführen des zweiten Stützorgans (40; 240) des ersten Stimulationssystems (8; 108; 208) in die entsprechende erste Position, umfassend:
- selektives Zuführen des ersten Stützorgans (38; 238) des zweiten Stimulationssystems (8; 108; 208) in die entsprechende zweite Position; danach
- Zuführen des ersten Stützorgans (38; 238) des zweiten Stimulationssystems (8; 108; 208) in die entsprechende erste Position; danach
- Festhalten des ersten Stützorgans (38; 238) des zweiten Stimulationssystems (8; 108; 208) in der entsprechenden ersten Position während einer zuvor bestimmten dritten Latenzzeit;
• eine zweite Bewegung des zweiten Stimulationssystems (8; 108; 208) nach dem ersten Bewegen des zweiten Stimulationssystems (8; 108; 208), umfassend:
- selektives Zuführen des zweiten Stützorgans (40; 240) des zweiten Stimulationssystems (8; 108; 208) in die entsprechende zweite Position; danach
- Zuführen des zweiten Stützorgans (40; 240) des zweiten Stimulationssystems (8; 108; 208) in die entsprechende erste Position; danach
- Festhalten des zweiten Stützorgans (40; 240) des zweiten Stimulationssystems (8; 108; 208) in der entsprechenden ersten Position während einer zuvor bestimmten vierten Latenzzeit,
wobei die zuvor bestimmte erste Latenzzeit und die zuvor bestimmte dritte Latenzzeit vorzugsweise gleich sind,
wobei die zuvor bestimmte zweite Latenzzeit und die zuvor bestimmte vierte Latenzzeit vorzugsweise gleich sind.

12. Verfahren zum Steuern nach Anspruch 11, wenn von Anspruch 10 abhängig, wobei jeder Zyklus weiter Folgendes beinhaltet:
• ausgehend von dem Zuführen des zweiten Stützorgans (40; 240) des ersten Stimulationssystems (8; 108; 208) in die entsprechende zweite Position:
- Zuführen des ersten Stützorgans (238) des dritten Stimulationssystems (8; 208; 308; 408; 508; 608) in die entsprechende zweite Position; danach
- Zuführen des ersten Stützorgans (238) des dritten Stimulationssystems (8; 208; 308; 408; 508; 608) in die entsprechende erste Position; danach
- Festhalten des ersten Stützorgans (238) des dritten Stimulationssystems (8; 208; 308; 408; 508; 608) in der entsprechenden ersten Position während einer zuvor bestimmten fünften Latenzzeit;
• ausgehend von dem Zuführen des zweiten Stützorgans (40; 240) des zweiten Stimulationssystems (8; 108; 208) in die entsprechende zweite Position:
- Zuführen des zweiten Stützorgans (240) des dritten Stimulationssystems (8; 208; 308; 408; 508; 608) in die entsprechende zweite Position; danach
- Zuführen des zweiten Stützorgans (240) des dritten Stimulationssystems (8; 208; 308; 408; 508; 608) in die entsprechende erste Position; danach
- Festhalten des zweiten Stützorgans (240) des dritten Stimulationssystems (8; 208; 308; 408; 508; 608) in der entsprechenden ersten Position während einer zuvor bestimmten sechsten Latenzzeit;
wobei das Zuführen des ersten Stützorgans (238) des dritten Stimulationssystems (8; 208; 308; 408; 508; 608) in die entsprechende erste Position vorzugsweise ausgehend von dem Zuführen des ersten Stützorgans (38; 238) des zweiten Stimulationssystems (8; 108; 208) in die entsprechende zweite Position umgesetzt wird,
wobei das Zuführen des zweiten Stützorgans (240) des dritten Stimulationssystems (8; 208; 308; 408; 508; 608) in die entsprechende erste Position vorzugsweise ausgehend von dem Zuführen des ersten Stützorgans (38; 238) des ersten Stimulationssystems (8; 108; 208) in die entsprechende zweite Position umgesetzt wird,
wobei die vorbestimmte fünfte Latenzzeit und die vorbestimmte sechste Latenzzeit vorzugsweise gleich sind.

13. Stimulationseinrichtung (2), die ein erstes Stimulationssystem (208A) nach Anspruch 8, und ein zweites Stimulationssystem (208B) nach einem der Ansprüche 1 bis 8 umfasst,
wobei jeder zweite Abstand, der jeweils dem ersten und dem zweiten Stützorgan (238A, 240A) des ersten Stimulationssystems (208A) entspricht, streng größer als der erste Abstand ist, der dem Stützorgan (238A, 240A) des ersten Stimulationssystems (208A) entspricht,
wobei jeder zweite Abstand, der jeweils dem ersten und dem zweiten Stützorgan (238B, 240B) des zweiten Stimulationssystems (208B, 240B) entspricht, streng kleiner als der erste entsprechende Abstand ist, der dem Stützorgan (238B, 240B) des zweiten Stimulationssystems (208B) entspricht,
wobei das erste Stimulationssystem (208A) und das zweite Stimulationssystems (208B) derart in Bezug zum anderen angeordnet sind, dass:
• für das erste Stimulationssystem (208A):
- das erste Stützorgan (238A) des ersten Stimulationssystems (208A) angeordnet ist, um einen Teil einer unteren Gliedmaße des Insassen aufzunehmen, welche eine rechte Wade (16) des Insassen ist; und
- das zweite Stützorgan (240A) des ersten Stimulationssystems (208A) angeordnet ist, um einen Teil einer unteren Gliedmaße des Insassen aufzunehmen, welche eine linke Wade (16) des Insassen ist;
• für das zweite Stimulationssystem (208B):
- das erste Stützorgan (238B) des zweiten Stimulationssystems (208B) angeordnet ist, um einen Teil einer unteren Gliedmaße des Insassen aufzunehmen, welche ein rechter Fuß (20) des Insassen ist; und
- das zweite Stützorgan (240B) des zweiten Stimulationssystems (208B) angeordnet ist, um einen Teil einer unteren Gliedmaße des Insassen aufzunehmen, welche ein linker Fuß (20) des Insassen ist.

14. Verfahren zum Steuern einer Stimulationseinrichtung nach Anspruch 13, welches die Umsetzung einer Vielzahl von aufeinanderfolgenden Zyklen beinhaltet, wobei jeder Zyklus beinhaltet:
• eine erste Bewegung des zweiten Stimulationssystems (208B), umfassend:
- selektives Zuführen des ersten Stützorgans (238B) des zweiten Stimulationssystems (208B) in die entsprechende zweite Position; danach
- Zuführen des ersten Stützorgans (238B) des zweiten Stimulationssystems (208B) in die entsprechende erste Position; danach
- Festhalten des ersten Stützorgans (238B) des zweiten Stimulationssystems (208B) in der entsprechenden ersten Position während einer zuvor bestimmten ersten Latenzzeit;
• eine zweite Bewegung des zweiten Stimulationssystems (208B) nach der ersten Bewegung des zweiten Stimulationssystems (208B), umfassend:
- selektives Zuführen des zweiten Stützorgans (240B) des zweiten Stimulationssystems (208B) in die entsprechende zweite Position; danach
- Zuführen des zweiten Stützorgans (240B) des zweiten Stimulationssystems (208B) in die entsprechende erste Position; danach
- Festhalten des zweiten Stützorgans (240B) des zweiten Stimulationssystems (208B) in der entsprechenden ersten Position während einer zuvor bestimmten zweiten Latenzzeit;
• ausgehend von dem Zuführen des ersten Stützorgans (238B) des zweiten Stimulationssystems (208B) in die entsprechende erste Position:
- selektives Zuführen des ersten Stützorgans (238A) des ersten Stimulationssystems (208A) in die entsprechende zweite Position; danach
- Zuführen des ersten Stützorgans (238A) des ersten Stimulationssystems (208A) in die entsprechende erste Position; danach
- Festhalten des ersten Stützorgans (238A) des ersten Stimulationssystems (208) in der entsprechenden ersten Position während einer zuvor bestimmten dritten Latenzzeit;
• ausgehend von dem Zuführen des zweiten Stützorgans (240B) des zweiten Stimulationssystems (208B) in die entsprechende erste Position:
- Zuführen des zweiten Stützorgans (240A) des ersten Stimulationssystems (208A) in die entsprechende zweite Position; danach
- Zuführen des zweiten Stützorgans (240A) des ersten Stimulationssystems (208A) in die entsprechende erste Position; danach
- Festhalten des zweiten Stützorgans (240A) des ersten Stimulationssystems (208A) in der entsprechenden ersten Position während einer zuvor bestimmten vierten Latenzzeit;
wobei die zuvor bestimmte erste Latenzzeit und die zuvor bestimmte zweite Latenzzeit vorzugsweise gleich sind,
wobei die zuvor bestimmte dritte Latenzzeit und die zuvor bestimmte vierte Latenzzeit vorzugsweise gleich sind,
wobei das Zuführen des zweiten Stützorgans (240B) des zweiten Stimulationssystems (208B) in die entsprechende zweite Position vorzugsweise nach dem Zuführen des ersten Stützorgans (238A) des ersten Stimulationssystems (208A) in die entsprechende erste Position umgesetzt wird,
wobei das Zuführen des ersten Stützorgans (238B) des zweiten Stimulationssystems (208B) in die entsprechende zweite Position vorzugsweise nach dem Zuführen des zweiten Stützorgans (240A) des ersten Stimulationssystems (208A) in die entsprechende erste Position umgesetzt wird.

15. Fahrzeugsitz (10), der mit einem Stimulationssystem (8; 108; 208; 308; 408; 508; 608) nach einem der Ansprüche 1 bis 8 ausgestattet ist, wobei das Stimulationssystem (8; 108; 208; 308; 408; 508; 608) an einer Fußstütze (18) des Sitzes (10), an einer Beinstütze (14) des Sitzes (10), an unteren Teilen des Sitzes (10) oder an Füßen des Sitzes befestigt ist, oder mit einer Stimulationseinrichtung (2) nach einem der Ansprüche 10, 11 oder 13 ausgestattet ist, wobei jedes Stimulationssystem (8; 108; 208; 308; 408; 508; 608) der Stimulationseinrichtung (2) an einer Fußstütze (18) des Sitzes (10), an einer Beinstütze (14) des Sitzes (10), an unteren Teilen des Sitzes (10) oder an Füßen des Sitzes befestigt ist.

16. Fahrzeug, das mindestens einen Sitz nach Anspruch 15 umfasst, oder mindestens einen Sitz (10) und ein Stimulationssystem (8; 108; 208; 308; 408; 508; 608) nach einem der Ansprüche 1 bis 8 umfasst, wobei das Stimulationssystem (8; 108; 208; 308; 408; 508; 608) auf einem Boden (12) des Fahrzeugs, gegenüber einem unteren Teil des Sitzes (10), oder an einem Element eines vorstehenden Sitzes (22), das unmittelbar vor dem Sitz (10) angeordnet ist, befestigt ist, oder mindestens einen Sitz (10) und eine Stimulationseinrichtung (2) nach einem entsprechenden der Ansprüche 10, 11 oder 13 umfasst, wobei das Stimulationssystem (8; 108; 208; 308; 408; 508; 608) der Stimulationseinrichtung (2) auf einem Boden (12) des Fahrzeugs, gegenüber einem unteren Teil des Sitzes (10), oder an einem Element eines vorstehenden Sitzes (22), das unmittelbar vor dem Sitz (10) angeordnet ist, befestigt ist.

## Claims

1. A system (8; 108; 208; 308; 408; 508; 608) for stimulating the lower limbs (4) of a passenger (6) of a vehicle, the stimulation system (8; 108; 208; 308; 408; 508; 608) including a support (26; 226) and a bearing device (24; 224),
the bearing device (24; 224) including first and second bearing members (38, 40; 238, 240), each of the first and second bearing members (38, 40; 238, 240) being intended to receive a respective portion of a lower limb (4) of the passenger (6),
each of the first and second bearing members (38, 40; 238, 240) being movable between a corresponding first position, in which the bearing member (38, 40; 238, 240) is located at a corresponding first distance from the support (26; 226), and a corresponding second position, in which the bearing member (38, 40; 238, 240) is located at a corresponding second distance from the support (26; 226) distinct from the first distance,
the stimulation system (8; 108; 208; 308; 408; 508; 608) being **characterised in that** it further includes a control unit and an actuation device (28; 228);
the actuation device being configured to drive the bearing device (24; 224) movably relative to the support (26; 226);
the control unit being configured to control the actuation device (28; 228) in order to cause, successively over time:
- the selective bringing of one of the first and second bearing members (3840; 238, 240) from the corresponding first position to the corresponding second position, then from the corresponding second position to the corresponding first position;
- then, after a non-zero latency time, the selective bringing of the other one of the first and second bearing members (40, 38; 240, 238) from the corresponding first position to the corresponding second position, then from the corresponding second position to the corresponding first position (40, 38; 240, 238).

2. The stimulation system (8; 108; 208; 308; 608) according to claim 1, wherein, for at least one bearing member (38, 40; 238, 240) of the first and second bearing members (38, 40; 238, 240), the actuation device (28; 228) includes at least one corresponding electromagnet (50; 250; 350) secured to one of the bearing device (24; 224) and the support (26; 226), and, for each electromagnet (50; 250; 350), the other one of the bearing device (24; 224) and the support (26; 226) including at least one corresponding magnetic element (370), each magnetic element (370) being made of a material having magnetic properties, each electromagnet (50; 250; 350) being arranged to interact with the corresponding magnetic element (370) to make the corresponding bearing member (38, 40; 238, 240) switch into the corresponding first position or the corresponding second position as a function of a state in which the electromagnet (50; 250; 350) is supplied with electric current.

3. The stimulation system (408) according to claim 1 or 2, wherein, for at least one bearing member (238, 240) of the first and second bearing members (238, 240), the actuation device (228) includes at least one balloon (480A, 480B) and a pump (482) connected to each balloon (480A, 480B), each balloon (480A, 480B) being arranged between said corresponding bearing member (238, 240) and the support (226), the pump (482) being configured to make a fluid circulate between the balloon (480A, 480B) and the pump (482) in order to cause a deformation of the balloon (480A, 480B) intended to make the bearing member (238, 240) switch into the corresponding first position or the corresponding second position as a function of a filling state of the balloon (280) with fluid.

4. The stimulation system (208; 308; 408; 508; 608) according to any one of claims 1 to 3, including, for each of the first and second bearing members (238, 240), at least one elastic biasing member (266), each elastic biasing member (266) being configured, when said corresponding bearing member (238, 240) is in the second position, to exert on said corresponding bearing member (238, 240) a return force tending to move said bearing member (238, 240) from the corresponding second position to the corresponding first position.

5. The stimulation system (508) according to any one of claims 1 to 4, wherein the actuation device (228) includes a motor (590) comprising an axis (592) coupled to at least one bearing member (238, 240) of the first and second bearing members (238, 240), for example by means of a reducer (594), the motor (590) being configured to make the bearing member (238, 240) switch into the corresponding first position or the corresponding second position as a function of a direction of rotation of the motor (590).

6. The stimulation system (108) according to any one of claims 1 to 5, wherein the bearing device includes a tray (30) made of an elastic deformable material and extending opposite the support (26), each of the first and second bearing members (38, 40) being defined as a portion of the tray (30), the actuation device (28) being configured to bring, of the first and second bearing members (38, 40; 238, 240), the bearing member (38, 40) into the corresponding first position by a deformation of the tray (30) to confer on the tray (30) a first shape, and into the corresponding second position by another deformation of the tray (30) to confer on the tray (30) a second shape distinct from the first shape.

7. The stimulation system (208; 308; 408; 508; 608) according to any one of claims 1 to 5, wherein each of the first and second bearing members (238, 240) is pivotally mounted, relative to the support (226), about a corresponding axis of rotation (X-X; Y-Y, Z-Z).

8. The stimulation system (208; 308; 408; 508) according to claim 7, wherein the first and second bearing members (238, 240) are secured to each other, the respective axes of rotation (X-X) of the first and second bearing members (238, 240) being coincident.

9. A stimulation installation (2) comprising a first stimulation system (8; 108; 208) according to any one of claims 1 to 8 and a second stimulation system (8; 108; 208) according to any one of claims 1 to 8,
each second distance corresponding respectively to the first and second bearing members (38, 40; 238, 240) of the first stimulation system (8; 108; 208) being strictly smaller than the first distance corresponding to said bearing member (38, 40; 238, 240) of the first stimulation system (8; 108; 208),
the second distance corresponding respectively to the first and second bearing members (38, 40; 238, 240) of the second stimulation system (8; 108; 208) being strictly smaller than the first distance corresponding to said bearing member (38, 40; 238, 240) of the second stimulation system (8; 108; 208),
the first stimulation system (8; 108; 208) and the second stimulation system (8; 108; 208) being arranged relative to one another so that:
• for the first stimulation system (8; 108; 208):
- the first bearing member (38; 238) of the first stimulation system (8; 108; 208) is arranged to receive a portion of a lower limb (4) of the passenger (6) which is a heel (42) of a right foot (20) of the passenger (6); and
- the second bearing member (40; 240) of the first stimulation system (8; 108; 208) is arranged to receive a portion of a lower limb (4) of the passenger (6) which is a distal plantar portion (44) of the right foot (20) of the passenger (6);
• for the second stimulation system (8; 108; 208):
- the first bearing member (38; 238) of the second stimulation system (8; 108; 208) is arranged to receive a portion of a lower limb (4) of the passenger (6) which is a heel (42) of a left foot (20) of the passenger (6); and
- the second bearing member (40; 240) of the second stimulation system (8; 108; 208) is arranged to receive a portion of a lower limb (4) of the passenger (6) which is a distal plantar portion (44) of the left foot (20) of the passenger (6).

10. The stimulation installation (2) according to claim 9, further comprising a third stimulation system (8; 208; 308; 408; 508; 608) according to any one of claims 1 to 8,
each second distance corresponding respectively to the first and second bearing members (238, 240) of the third stimulation system (8; 208; 308; 408; 508; 608) being strictly larger than the first distance corresponding to said bearing member (238, 240) of the third stimulation system (8; 208; 308; 408; 508; 608),
the third stimulation system (8; 208; 308; 408; 508; 608) being disposed relative to the first stimulation system (8; 108; 208) and the second stimulation system (8; 108; 208) so that:
- the first bearing member (238) of the third stimulation system (8; 208; 308; 408; 508; 608) is arranged to receive a portion of a lower limb (4) of the passenger (6) which is a right calf (16) of the passenger (6); and
- the second bearing member (240) of the third stimulation system (8; 208; 308; 408; 508; 608) is arranged to receive a portion of a lower limb (4) of the passenger (6) which is a left calf (16) of the passenger (6).

11. A method for controlling a stimulation installation (2) according to claim 9 or 10, including the implementation of a plurality of successive cycles, each cycle including:
• a first movement of the first stimulation system (8; 108; 208) comprising:
- selectively bringing the first bearing member (38; 238) of the first stimulation system (8; 108; 208) to the corresponding second position; then
- bringing the first bearing member (38; 238) of the first stimulation system (8; 108; 208) to the corresponding first position; then
- holding the first bearing member (38; 238) of the first stimulation system (8; 108; 208) in the corresponding first position for a first predetermined latency time;
• a second movement of the first stimulation system (8; 108; 208), subsequent to the first movement of the first stimulation system (8; 108; 208), comprising:
- selectively bringing the second bearing member (40; 240) of the first stimulation system (8; 108; 208) to the corresponding second position; then
- bringing the second bearing member (40; 240) of the first stimulation system (8; 108; 208) to the corresponding first position; then
- holding the second bearing member (40; 240) of the first stimulation system (8; 108; 208) in the corresponding first position for a second predetermined latency time;
• a first movement of the second stimulation system (8; 108; 208), subsequent to bringing of the second bearing member (40; 240) of the first stimulation system (8; 108; 208) to the corresponding first position, comprising:
- selectively bringing the first bearing member (38; 238) of the second stimulation system (8; 108; 208) to the corresponding second position; then
- bringing the first bearing member (38; 238) of the second stimulation system (8; 108; 208) to the corresponding first position; then
- holding the first bearing member (38; 238) of the second stimulation system (8; 108; 208) in the corresponding first position for a third predetermined latency time;
• a second movement of the second stimulation system (8; 108; 208), subsequent to the first movement of the second stimulation system (8; 108; 208), comprising:
- selectively bringing the second bearing member (40; 240) of the second stimulation system (8; 108; 208) to the corresponding second position; then
- bringing the second bearing member (40; 240) of the second stimulation system (8; 108; 208) to the corresponding first position; then
- holding the second bearing member (40; 240) of the second stimulation system (8; 108; 208) in the corresponding first position for a fourth predetermined latency time,
the first predetermined latency time and the third predetermined latency time preferably being equal,
the second predetermined latency time and the fourth predetermined latency time preferably being equal.

12. The control method of claim 11 when it depends on claim 10, each cycle further including:
• as of bringing the second bearing member (40; 240) of the first stimulation system (8; 108; 208) to the corresponding second position:
- bringing the first bearing member (238) of the third stimulation system (8; 208; 308; 408; 508; 608) to the corresponding second position; then
- bringing the first bearing member (238) of the third stimulation system (8; 208; 308; 408; 508; 608) to the corresponding first position; then
- holding the first bearing member (238) of the third stimulation system (8; 208; 308; 408; 508; 608) in the corresponding first position for a fifth predetermined latency time;
• as of bringing the second bearing member (40; 240) of the second stimulation system (8; 108; 208) to the corresponding second position:
- bringing the second bearing member (240) of the third stimulation system (8; 208; 308; 408; 508; 608) to the corresponding second position; then
- bringing the second bearing member (240) of the third stimulation system (8; 208; 308; 408; 508; 608) to the corresponding first position; then
- holding the second bearing member (240) of the third stimulation system (8; 208; 308; 408; 508; 608) in the corresponding first position for a sixth predetermined latency time;
bringing the first bearing member (238) of the third stimulation system (8; 208; 308; 408; 508; 608) to the corresponding first position being, preferably, implemented as of bringing the first bearing member (38; 238) of the second stimulation system (8; 108; 208) to the corresponding second position,
bringing the second bearing member (240) of the third stimulation system (8; 208; 308; 408; 508; 608) to the corresponding first position being, preferably, implemented as of bringing the first bearing member (38; 238) of the first stimulation system (8; 108; 208) to the corresponding second position,
the predetermined fifth latency time and the predetermined sixth latency time preferably being equal.

13. A stimulation installation (2) comprising a first stimulation system (208A) according to claim 8 and a second stimulation system (208B) according to any one of claims 1 to 8,
each second distance corresponding respectively to the first and second bearing members (238A, 240A) of the first stimulation system (208A) being strictly larger than the first distance corresponding to said bearing member (238A, 240A) of the first stimulation system (208A),
each second distance corresponding respectively to the first and second bearing members (238B, 240B) of the second stimulation system (208B, 240B) being strictly smaller than the first distance corresponding to said bearing member (238B, 240B) of the second stimulation system (208B),
the first stimulation system (208A) and the second stimulation system (208B) being arranged relative to one another so that:
• for the first stimulation system (208A):
- the first bearing member (238A) of the first stimulation system (208A) is arranged to receive a portion of a lower limb of the passenger which is a right calf (16) of the passenger; and
- the second bearing member (240A) of the first stimulation system (208A) is arranged to receive a portion of a lower limb of the passenger which is a left calf (16) of the passenger;
• for the second stimulation system (208B):
- the first bearing member (238B) of the second stimulation system (208B) is arranged to receive a portion of a lower limb of the passenger which is a right foot (20) of the passenger; and
- the second bearing member (240B) of the second stimulation system (208B) is arranged to receive a portion of a lower limb of the passenger which is a left foot (20) of the passenger.

14. A method for controlling a stimulation installation according to claim 13, including the implementation of a plurality of successive cycles, each cycle including:
• a first movement of the second stimulation system (208B), comprising:
- selectively bringing the first bearing member (238B) of the second stimulation system (208B) to the corresponding second position; then
- bringing the first bearing member (238B) of the second stimulation system (208B) to the corresponding first position; then
- holding the first bearing member (238B) of the second stimulation system (208B) in the corresponding first position for a first predetermined latency time;
• a second movement of the second stimulation system (208B), subsequent to the first movement of the second stimulation system (208B), comprising:
- selectively bringing the second bearing member (240B) of the second stimulation system (208B) to the corresponding second position; then
- bringing the second bearing member (240B) of the second stimulation system (208B) to the corresponding first position; then
- holding the second bearing member (240B) of the second stimulation system (208B) in the corresponding first position for a second predetermined latency time,
• as of bringing the first bearing member (238B) of the second stimulation system (208B) to the corresponding first position:
- selectively bringing the first bearing member (238A) of the first stimulation system (208A) to the corresponding second position; then
- bringing the first bearing member (238A) of the first stimulation system (208A) to the corresponding first position; then
- holding the first bearing member (238A) of the first stimulation system (208) in the corresponding first position for a third predetermined latency time;
• as of bringing the second bearing member (240B) of the second stimulation system (208B) to the corresponding first position:
- bringing the second bearing member (240A) of the first stimulation system (208A) to the corresponding second position; then
- bringing the second bearing member (240A) of the first stimulation system (208A) to the corresponding first position; then
- holding the second bearing member (240A) of the first stimulation system (208A) in the corresponding first position for a fourth predetermined latency time;
the first predetermined latency time and the second predetermined latency time preferably being equal,
the third predetermined latency time and the fourth predetermined latency time preferably being equal,
bringing the second bearing member (240B) of the second stimulation system (208B) to the corresponding second position being, preferably, implemented after bringing the first bearing member (238A) of the first stimulation system (208A) to the corresponding first position,
bringing the first bearing member (238B) of the second stimulation system (208B) to the corresponding second position being, preferably, implemented after bringing the second bearing member (240A) of the first stimulation system (208A) to the corresponding first position.

15. A vehicle seat (10) equipped with a stimulation system (8; 108; 208; 308; 408; 508; 608) according to any one of claims 1 to 8, the stimulation system (8; 108; 208; 308; 408; 508; 608) being fastened to a footrest (18) of the seat (10), to a leg rest (14) of the seat (10), to bottom portions of the seat (10) or to feet of the seat, or equipped with a stimulation installation (2) according to any one of claims 10, 11 or 13, each stimulation system (8; 108; 208; 308; 408; 508; 608) of the stimulation installation (2) being fastened to a footrest (18) of the seat (10), to a leg rest (14) of the seat (10), to bottom portions of the seat (10) or to feet of the seat (10).

16. A vehicle comprising at least one seat according to claim 15, or comprising at least one seat (10) and a stimulation system (8; 108; 208; 308; 408; 508; 608) according to any one of the corresponding claims 1 to 8, the stimulation system (8; 108; 208; 308; 408; 508; 608) being fastened to a floor (12) of the vehicle, opposite a bottom portion of the seat (10), or to an element of a preceding seat (22) disposed immediately in front of the seat (10), or comprising at least one seat (10) and a stimulation installation (2) according to any one of the corresponding claims 10, 11 or 13, the stimulation system (8; 108; 208; 308; 408; 508; 608) of the stimulation installation (2) being fastened to a floor (12) of the vehicle, opposite a bottom portion of the seat (10), or to an element of a preceding seat (22) disposed immediately in front of the seat (10).
